# EUROPEAN PATENT APPLICATION

(11) **EP 3 310 057 A1**
(43) Date of publication of application: **18.04.2018**
(21) Application number: 16306347.2
(22) Date of filing: 12.10.2016
(51) Int. Cl.: H04N 19/597, H04N 19/29, H04N 21/854, H04N 21/81, G06T 9/20

(54) **METHOD, APPARATUS AND STREAM FOR CODING TRANSPARENCY AND SHADOW INFORMATION OF IMMERSIVE VIDEO FORMAT**

(71) Applicant: Thomson Licensing, 92130 Issy-les-Moulineaux (FR)
(72) Inventor: BRIAND, GERARD, 35576 CESSON SEVIGNE Cedex (FR); DORE, RENAUD, 35576 CESSON SEVIGNE Cedex (FR); ORLAC, IZABELA, 35576 CESSON SEVIGNE Cedex (FR); CHAMPEL, MARY-LUC, 35576 CESSON SEVIGNE CEDEX (FR)
(74) Representative: Merlet, Hugues

(57) **Abstract**

A method and device for encoding data representative of an omnidirectional video into a bitstream, comprising the encoding of data representative of a first mapping surface into a first layer of the bitstream, the first layer referring to a first video track that comprises data corresponding to the background of the omnidirectional video, and the encoding of shadow information associated with at least a part of the first mapping surface into the bitstream, the at least a part being deformed to correspond to the topology of at least a part of a scene represented in the first video and comprising shadow.

The present disclosure also refers to a corresponding decoding method and apparatus.

## Description

### 1. Technical field

The present disclosure relates to the domain of immersive video content. The present disclosure is also understood in the context of the formatting of the data representative of the immersive content, for example for the rendering on end-user devices such as mobile devices or Head-Mounted Displays.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Display systems such as a head-mounted display (HMD) or a CAVE allow a user to browse into an immersive video content. The immersive video content may be obtained with CGI (Computer-generated imagery) techniques. With such immersive video content, it is possible to compute the content according to the point of view of the user watching it, but with unrealistic graphical quality. The immersive video content may be obtained with the mapping of a video (e.g. a video acquired by several cameras) on a surface such as a sphere or a cube. Such an immersive video content provides good image quality but issues related to the parallax, especially for objects of the scene of the foreground, i.e. close from the cameras, appear.

In the context of immersive video content, free-viewpoint video (FVV) is a technique for representation and coding of multi-view video and subsequent re-rendering from arbitrary viewpoints. While increasing the user experience in immersive context, the amount of data to be transported to the renderer is very important and may be an issue.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of encoding data representative of an omnidirectional video into a bitstream, the method comprising:
- encoding data representative of a first mapping surface into a first layer of the bitstream, the first layer referring to a first video track, data comprised in the first video track corresponding to background data of the omnidirectional video;
- encoding shadow information associated with at least a part of the first mapping surface into the bitstream, the at least a part being deformed to correspond to the topology of at least a part of a scene represented in the first video and comprising shadow.

The present disclosure relates to a device configured to encode data representative of an omnidirectional video into a bitstream, the device comprising a memory associated with at least one processor configured to:
- encode data representative of a first mapping surface into a first layer of the bitstream, the first layer referring to a first video track, data comprised in the first video track corresponding to background data of the omnidirectional video;
- encode shadow information associated with at least a part of the first mapping surface into the bitstream, the at least a part being deformed to correspond to the topology of at least a part of a scene represented in the first video and comprising shadow.

The present disclosure relates to a device configured to encode data representative of an omnidirectional video into a bitstream, the device comprising:
- an encoder configured to encode data representative of a first mapping surface into a first layer of the bitstream, the first layer referring to a first video track, data comprised in the first video track corresponding to background data of the omnidirectional video;
- an encoder configured to encode shadow information associated with at least a part of the first mapping surface into the bitstream, the at least a part being deformed to correspond to the topology of at least a part of a scene represented in the first video and comprising shadow.

The present disclosure relates to a device configured to encode data representative of an omnidirectional video into a bitstream, the device comprising:
- means for encoding data representative of a first mapping surface into a first layer of the bitstream, the first layer referring to a first video track, data comprised in the first video track corresponding to background data of the omnidirectional video;
- means for encoding shadow information associated with at least a part of the first mapping surface into the bitstream, the at least a part being deformed to correspond to the topology of at least a part of a scene represented in the first video and comprising shadow.

The present disclosure relates to a method of decoding data representative of an omnidirectional video from a bitstream, the method comprising:
- decoding data representative of a first mapping surface from a first layer of the bitstream, the first layer referring to a first video track, data comprised in the first video track corresponding to background data of the omnidirectional video;
- decoding shadow information associated with at least a part of the first mapping surface from the bitstream, the at least a part being deformed to correspond to the topology of at least a part of a scene represented in the first video and comprising shadow.

The present disclosure relates to a device configured to decode data representative of an omnidirectional video from a bitstream, the device comprising a memory associated with at least one processor configured to:
- decode data representative of a first mapping surface from a first layer of the bitstream, the first layer referring to a first video track, data comprised in the first video track corresponding to background data of the omnidirectional video;
- decode shadow information associated with at least a part of the first mapping surface from the bitstream, the at least a part being deformed to correspond to the topology of at least a part of a scene represented in the first video and comprising shadow.

The present disclosure relates to a device configured to decode data representative of an omnidirectional video from a bitstream, the device comprising:
- a decoder configured to decode data representative of a first mapping surface from a first layer of the bitstream, the first layer referring to a first video track, data comprised in the first video track corresponding to background data of the omnidirectional video;
- a decoder configured to decode shadow information associated with at least a part of the first mapping surface from the bitstream, the at least a part being deformed to correspond to the topology of at least a part of a scene represented in the first video and comprising shadow.

The present disclosure relates to a device configured to decode data representative of an omnidirectional video into a bitstream, the device comprising:
- means for decoding data representative of a first mapping surface from a first layer of the bitstream, the first layer referring to a first video track, data comprised in the first video track corresponding to background data of the omnidirectional video;
- means for decoding shadow information associated with at least a part of the first mapping surface from the bitstream, the at least a part being deformed to correspond to the topology of at least a part of a scene represented in the first video and comprising shadow.

According to a particular characteristic, the shadow information is encoded into (respectively decoded from) a second layer of the bitstream with data representative of the first mapping surface, the second layer referring to a second video track.

According to a specific characteristic, the shadow information is encoded into (respectively decoded from) the first layer, the shadow information comprising a pointer to a second video track.

According to another characteristic, the second video track comprises data representative of transparency to apply to the first video.

According to a particular characteristic, the second video track comprises data representative of shadow associated with data representative of background obtained from the first video and data representative of transparency.

The present disclosure also relates to a bitstream carrying data representative of a first mapping surface in a first layer, the first layer referring to a first video track comprising background data of an omnidirectional video and shadow information associated with at least a part of the first mapping surface, the at least a part being deformed to correspond to the topology of at least a part of a scene represented in the first video and comprising shadow.

The present disclosure also relates to a computer program product comprising program code instructions to execute the steps of the method of encoding or decoding data representative of an omnidirectional video, when this program is executed on a computer.

The present disclosure also relates to a (non-transitory) processor readable medium having stored therein instructions for causing a processor to perform at least the abovementioned method of encoding or decoding data representative of an omnidirectional video.

The present disclosure also relates to a (non-transitory) processor readable medium having stored therein instructions for causing a processor to perform at least the abovementioned method of rendering an omnidirectional video from a bitstream carrying data representative of the omnidirectional video, when this program is executed on a computer.

### 4. List of figures

The present disclosure will be better understood, and other specific features and advantages will emerge upon reading the following description, the description making reference to the annexed drawings wherein:
- figure 1 shows an immersive content, according to a particular embodiment of the present principles;
- figure 2 shows an example of an equirectangular mapping function, according to a specific embodiment of the present principles;
- figure 3 shows an example layout of the cube mapping function, according to a specific embodiment of the present principles;
- figure 4 shows a functional overview of an encoding and decoding system according to an example of the present principles;
- figures 5 to 9 each shows a first system configured to process an immersive content, according to specific embodiments of the present principles;
- figures 10 to 12 each shows a second system configured to process an immersive content, according to specific embodiments of the present principles;
- figure 13 shows a first embodiment of a device configured to render an immersive content, according to an example of the present disclosure;
- figure 14 shows a second embodiment of a device configured to render an immersive content, according to an example of the present disclosure;
- figure 15 shows a third embodiment of a device configured to render an immersive content, according to an example of the present disclosure;
- figure 16 shows a process of obtaining, encoding and/or formatting data representative of an immersive content, according to a particular embodiment of the present principles;
- figure 17 shows a process of decoding and rendering an immersive content, according to a particular embodiment of the present principles;
- figure 18 shows the obtaining of an immersive content from several video contents, according to a specific embodiment of the present principles;
- figure 19 shows an example of an architecture of a device configured for implementing the method(s) of figures 28 to 33, in accordance with an example of the present principles;
- figures 20 to 25 each shows the syntax of a data stream, according to example embodiments of the present principles;
- figure 26 shows a process of obtaining shadow information for an immersive content, according to a particular embodiment of the present principles;
- figure 27 shows a mapping surface used to represent at least a part of an immersive content comprising one or more shadows, according to a particular embodiment of the present principles;
- figures 28 to 30 each shows a method for encoding data representative of an immersive content, according to particular embodiments of the present principles;
- figures 31 to 33 each shows a method for decoding data representative of an immersive content, according to particular embodiments of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

The present description illustrates the principles of the present disclosure. It will thus be appreciated that those skilled in the art will be able to devise various arrangements that, although not explicitly described or shown herein, embody the principles of the disclosure.

According to non-limitative embodiments of the present disclosure, methods and devices to encode images of an omnidirectional video (also called immersive video or large field-of-view video or VR 360 video) in a stream are disclosed. Methods and devices to decode images of an omnidirectional video from a stream are also disclosed. Syntaxes of a stream encoding one or more images of an omnidirectional video are also disclosed.

According to a first aspect, the present principles will be described in reference to a first particular embodiment of a method of (and a device configured for) encoding data representative of an omnidirectional video (also called immersive video) into a bitstream. To reach that aim, data representative of a first mapping surface (e.g. a sphere, a cube, a cylinder, an octahedron) is encoded into a first layer of the bitstream. The first layer refers to (or points to) a first video track that comprises a first video representing the background of the omnidirectional video, the first mapping surface being used to map the first video on it. The first video is a "flat" video in the sense that there is no parallax between the objects represented in the first video. Data representative of a second mapping surface (e.g. a sphere, a cube, a cylinder, an octahedron) is encoded into a second layer of the bitstream. The second mapping surface is different from the first mapping surface, for example the dimensions of the first and second mapping surfaces are different, the centers of the first and second mapping surface are different and/or the types of the first and second mapping surfaces are different. The second layer refers to (or points to) a second video track that comprises a second video representing at least a part of the foreground of the omnidirectional video, the second mapping surface being used to map the second video on the second mapping surface. The second video is a "flat" video in the sense that there is no parallax between the objects represented in the second video. The use of different mapping surfaces for the first "background" video and the second "foreground" video enables to obtain parallax when overlaying the first and second videos to obtain the omnidirectional video.

A corresponding method of (and a device configured for) decoding data representative of the omnidirectional video is also described with regard to the first aspect of the present principles.

According to a second aspect, the present principles will be described in reference to a second particular embodiment of a method of (and a device configured for) encoding data representative of an omnidirectional video (also called immersive video) into a bitstream. To reach that aim, transparency information is encoded into the bitstream in addition to the data representative of the first mapping surface and of the second mapping surface. The transparency information is associated with the second video and may be encoded into the second layer or into a third layer of the bitstream. The encoding of additional transparency information into the bitstream enables to manage the compositing of the first and second videos to obtain the omnidirectional video, the transparency information may be seen as a mixing factor to manage the merging of two different videos to obtain one composited omnidirectional video.

A corresponding method of (and a device configured for) decoding data representative of the omnidirectional video is also described with regard to the second aspect of the present principles.

According to a third aspect, the present principles will be described in reference to a third particular embodiment of a method of (and a device configured for) encoding data representative of an omnidirectional video (also called immersive video) into a bitstream. To reach that aim, data representative of a first mapping surface (e.g. a sphere, a cube, a cylinder, an octahedron) is encoded into a first layer of the bitstream. The first layer refers to (or points to) a first video track that comprises a first video representing the background of the omnidirectional video, the first mapping surface being used to map the first video on it. The first video is a "flat" video in the sense that there is no parallax between the objects represented in the first video. In addition to the data of the first mapping surface, shadow information is encoded into the bitstream. The shadow information is intended to be mapped on the first mapping surface where the shadow has to appear on the first "background" video. According to the third aspect of the present principles, the first mapping surface is partially deformed to correspond to the topology of the scene represented in the first video, especially on the parts of the scene where the shadow(s) has to appear. The addition of shadow information associated with the same first mapping surface than the one used to represent the first "background" video enables to enhance the realism of the rendering of the scene and to bring parallax in the omnidirectional video composed of the first "background" video and the shadow information.

A corresponding method of (and a device configured for) decoding data representative of the omnidirectional video is also described with regard to the third aspect of the present principles.

The first, second and third aspects of the present principles may be implemented independently from each other but may also be combined. For example, the bitstream may comprise a first layer referring to the background, a second layer referring to the foreground, a third layer referring to transparency information associated with the foreground. According to another example, the bitstream may comprise a first layer referring to the background, a second layer referring to the foreground, a third layer referring to transparency information associated with the foreground and a fourth layer referring to the shadow information.

It is understood with a video or a video content a sequence of successive still images, the sequence comprising one or more still image(s). The omnidirectional video consequently comprises one or more successive image(s).

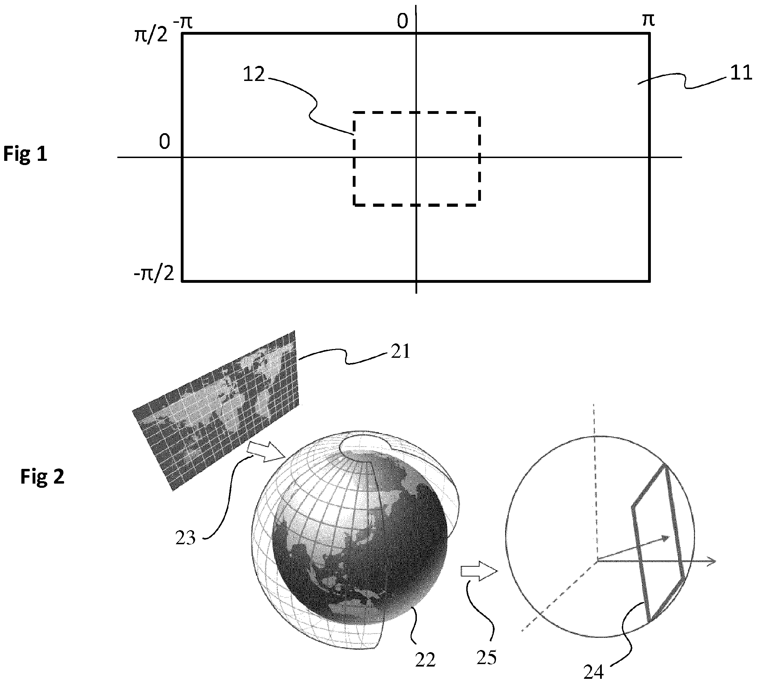

**Figure 1** shows an example of an omnidirectional content 11 (called immersive content in the following description), in the non-limiting exemplary form of a 4π steradian video content, according to a particular and non-limitative embodiment of the present principles. Figure 1 corresponds to a planar representation of the immersive content 11. The immersive content 11 corresponds for example to a real scene acquired with one or more cameras or to the combining / compositing of different elements of a real scene each acquired with one or more cameras. A part 12 of the immersive content 11 corresponds for example to the part of the immersive content displayed onto a display device adapted to visualize immersive contents, the size of the part 12 being for example equal to the field of view provided by the display device.

The display device used to visualize the immersive content 11 is for example a HMD (Head-Mounted Display), worn on the head of a user or as part of a helmet. The HMD advantageously comprises one or more display screens (for example LCD (Liquid Crystal Display), OLED (Organic Light-Emitting Diode) or LCOS (Liquid Crystal On Silicon)) and sensor(s) configured for measuring the change(s) of position of the HMD, for example gyroscopes or an IMU (Inertial Measurement Unit), according to one, two or three axes of the real world (pitch, yaw and/or roll axis). The part 12 of the immersive content 11 corresponding to the measured position of the HMD is advantageously determined with a specific function establishing the relationship between the point of view associated with the HMD in the real world and the point of view of a virtual camera associated with the immersive content 11. Controlling the part 12 of the video content to be displayed on the display screen(s) of the HMD according to the measured position of the HMD enables a user wearing the HMD to browse into the immersive content, which is larger than the field of view associated with the display screen(s) of the HMD. For example, if the field of view offered by the HMD is equal to 110°(for ex ample about the yaw axis) and if the immersive content offers a content of 180°, the user wearing the HMD may rotate his/her head to the right or to the left to see the parts of the video content outside the field of view offered by the HMD. According to another example, the immersive system is a CAVE (Cave Automatic Virtual Environment) system, wherein the immersive content is projected onto the walls of a room. The walls of the CAVE are for example made up of rear-projection screens or flat panel displays. The user may thus browse his/her gaze on the different walls of the room. The CAVE system is advantageously provided with cameras acquiring images of the user to determine by video processing of these images the gaze direction of the user. According to a variant, the gaze or the pose of the user is determined with a tracking system, for example an infrared tracking system, the user wearing infrared sensors. According to another variant, the immersive system is a tablet with a tactile display screen, the user browsing into the content by scrolling the content with one or more fingers sliding onto the tactile display screen.

The immersive content 11 and the part 12 as well may comprise foreground object(s) and background object(s). The background object(s) may be obtained for example from a first video representing the background of the immersive content 11. The foreground object(s) may be obtained for example from one or more second videos each representing one or more of the foreground objects, the immersive content being obtained by compositing of the first video with the second video(s).

Naturally, the immersive content 11 is not limited to a 4π steradian video content but extends to any video content (or audio-visual content) having a size greater than the field of view 12. The immersive content may be for example a 2π, 2.5 π, 3π steradian content and so on.

An immersive video is a video encoded on at least one rectangular image that is a two-dimension array of pixels (i.e. element of color information) like a "regular" video. To be rendered, the image is first mapped on the inner face of a convex volume, also called mapping surface (e.g. a sphere, a cube, a pyramid), and, second, a part of this volume is captured by a virtual camera. Images captured by the virtual camera are rendered on the screen of an immersive display device (e.g a HMD). A stereoscopic video is encoded on one or two rectangular images, projected on two mapping surfaces which are combined to be captured by two virtual cameras according to the characteristics of the device. Pixels are encoded according to a mapping function in the image. The mapping function depends on the mapping surface. For a same mapping surface, several mapping functions may be possible. For example, the faces of a cube may be structured according to different layouts within the image surface. A sphere may be mapped according to an equirectangular projection or to a gnomonic projection for example.

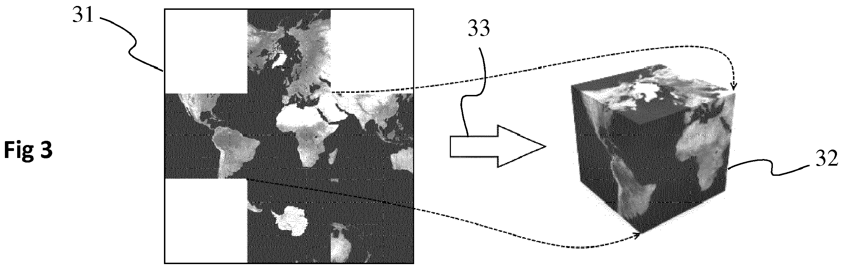

Figures 2 and 3 provide non-limiting examples of such mapping functions.

**Figure 2** shows an example of an equirectangular mapping function. The sequence of image(s) of an immersive video is encoded on a rectangular image 21 meant to be mapped on a spherical mapping surface 22. The mapping function 23 establishes a mapping between each pixel of the image 21 and a point on the mapping surface 22 (and vice versa). On figure 2, the mapping function 23 is based on the equirectangular projection (also called equidistant cylindrical projection). The image on the image 21 is distorted. The distances are respected at the equator and stretched at poles. Straight lines are no longer straight and perspectives are distorted. In variants, the mapping function 23 is based on the equidistant conic projection for instance. If the screen 24 is rectangular, as for head-mounted display devices (HMD) or tablets or smartphones, a part of the mapping surface 22 is selected. The projection function 25 consists in selecting a part of the mapping surface 22 as seen by a camera located at the center of the sphere, the camera being configured in terms of field of view and resolution in order to produce an image that directly fits with the screen 24. The chosen field of view depends on the characteristics of the display device. For HMD for example, the angle of the field of view is close to the human stereoscopic vision field, which is around one hundred and twenty degrees. The aiming direction of the camera corresponds to the direction the user is looking toward and the virtual camera controller of the immersive video rendering device is used to modify the aiming direction of the camera. In a variant, the video of figure 2 is stereoscopic. In such a variant, the image 21 contains two distinct images which are mapped on two distinct mapping surfaces 22. The mapping surfaces are combined according to the type of the screen to render the stereoscopic effect.

**Figure 3** shows an example layout of the cube mapping function. The sequence of images is encoded on a rectangular (or square) image 31 meant to be mapped on a cubical mapping surface 32. The mapping function 33 establishes a correspondence between squares in the image 31 and faces of the cube 32. Vice versa, the mapping function determines how the faces of the cube 32 are organized within the surface of the image 31. Images on each face are not distorted. However, in the total image of the image 31, lines are piece-wise straight and perspectives are broken. The image may contain empty squares (filled with default or random color information, white on the example of figure 3). The projection function works as the projection function of figure 2. A camera is placed at the center of the cube 32 and captures an image that fits the screen of the immersive rendering device.

In variants, other mapping surfaces and/or mapping functions are used, mapping the video image on a cylinder or on a pyramid for instance.

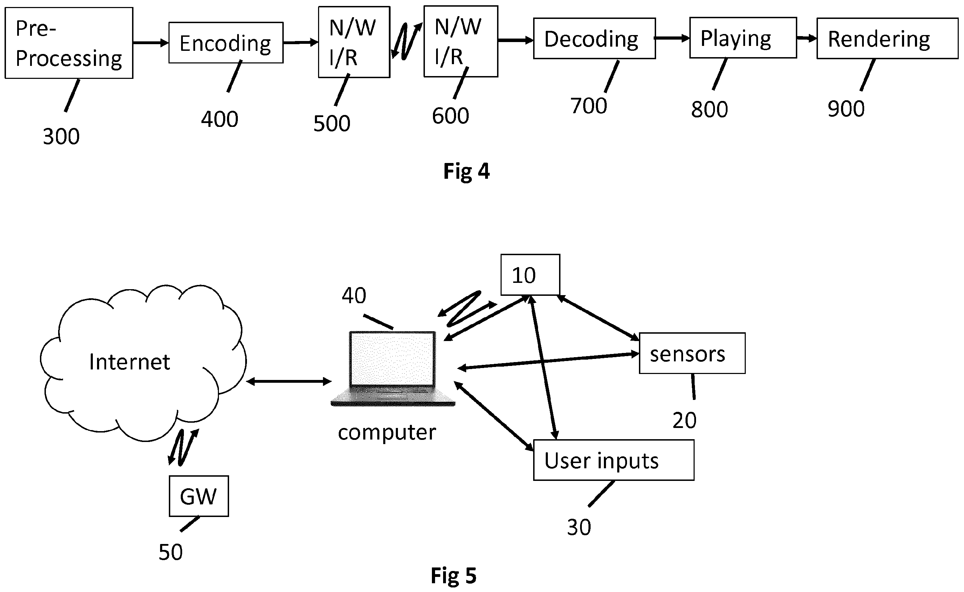

**Figure 4** illustrates a general overview of an encoding and decoding system according to an example embodiment. The system of figure 4 is a functional system. A pre-processing module 300 may prepare the content for encoding by the encoding device 400. The pre-processing module 300 may perform multi-image acquisition, merging of the acquired multiple images in a common space (typically a 3D sphere if we encode the directions), and mapping of the 3D sphere into a 2D image using, for example, but not limited to, an equirectangular mapping or a cube mapping. The pre-processing module 300 may also accept an omnidirectional video in a particular format (for example, equirectangular) as input, and pre-processes the video to change the mapping into a format more suitable for encoding. Depending on the acquired video data representation, the pre-processing module 300 may perform a mapping space change. The encoding device 400 and the encoding method will be described with respect to other figures of the specification. After being encoded, the data, which may encode immersive video data or 3D CGI encoded data for instance, are sent to a network interface 500, which can be typically implemented in any network interface, for instance present in a gateway. The data are then transmitted through a communication network, such as internet but any other network can be foreseen. Then the data are received via network interface 600. Network interface 600 can be implemented in a gateway, in a television, in a set-top box, in a head mounted display device, in an immersive (projective) wall or in any immersive video rendering device. After reception, the data are sent to a decoding device 700. Decoding function is one of the processing functions described in the following figures 5 to 15. Decoded data are then processed by a player 800. Player 800 prepares the data for the rendering device 900 and may receive external data from sensors or users input data. More precisely, the player 800 prepares the part of the video content that is going to be displayed by the rendering device 900. The decoding device 700 and the player 800 may be integrated in a single device (e.g., a smartphone, a game console, a STB, a tablet, a computer, etc.). In a variant, the player 800 is integrated in the rendering device 900.

Several types of systems may be envisioned to perform the decoding, playing and rendering functions of an immersive display device, for example when rendering an immersive video.

A first system, for processing augmented reality, virtual reality, or augmented virtuality content is illustrated in **figures 5 to 9****.** Such a system comprises processing functions, an immersive video rendering device which may be a head-mounted display (HMD), a tablet or a smartphone for example and may comprise sensors. The immersive video rendering device may also comprise additional interface modules between the display device and the processing functions. The processing functions can be performed by one or several devices. They can be integrated into the immersive video rendering device or they can be integrated into one or several processing devices. The processing device comprises one or several processors and a communication interface with the immersive video rendering device, such as a wireless or wired communication interface.

The processing device can also comprise a second communication interface with a wide access network such as internet and access content located on a cloud, directly or through a network device such as a home or a local gateway. The processing device can also access a local storage through a third interface such as a local access network interface of Ethernet type. In an embodiment, the processing device may be a computer system having one or several processing units. In another embodiment, it may be a smartphone which can be connected through wired or wireless links to the immersive video rendering device or which can be inserted in a housing in the immersive video rendering device and communicating with it through a connector or wirelessly as well. Communication interfaces of the processing device are wireline interfaces (for example a bus interface, a wide area network interface, a local area network interface) or wireless interfaces (such as a IEEE 802.11 interface or a Bluetooth® interface).

When the processing functions are performed by the immersive video rendering device, the immersive video rendering device can be provided with an interface to a network directly or through a gateway to receive and/or transmit content.

In another embodiment, the system comprises an auxiliary device which communicates with the immersive video rendering device and with the processing device. In such an embodiment, this auxiliary device can contain at least one of the processing functions.

The immersive video rendering device may comprise one or several displays. The device may employ optics such as lenses in front of each of its display. The display can also be a part of the immersive display device like in the case of smartphones or tablets. In another embodiment, displays and optics may be embedded in a helmet, in glasses, or in a visor that a user can wear. The immersive video rendering device may also integrate several sensors, as described later on. The immersive video rendering device can also comprise several interfaces or connectors. It might comprise one or several wireless modules in order to communicate with sensors, processing functions, handheld or other body parts related devices or sensors.

The immersive video rendering device can also comprise processing functions executed by one or several processors and configured to decode content or to process content. By processing content here, it is understood all functions to prepare a content that can be displayed. This may comprise, for instance, decoding a content, merging content before displaying it and modifying the content to fit with the display device.

One function of an immersive content rendering device is to control a virtual camera which captures at least a part of the content structured as a virtual volume. The system may comprise pose tracking sensors which totally or partially track the user's pose, for example, the pose of the user's head, in order to process the pose of the virtual camera. Some positioning sensors may track the displacement of the user. The system may also comprise other sensors related to environment for example to measure lighting, temperature or sound conditions. Such sensors may also be related to the users' bodies, for instance, to measure sweating or heart rate. Information acquired through these sensors may be used to process the content. The system may also comprise user input devices (e.g. a mouse, a keyboard, a remote control, a joystick). Information from user input devices may be used to process the content, manage user interfaces or to control the pose of the virtual camera. Sensors and user input devices communicate with the processing device and/or with the immersive rendering device through wired or wireless communication interfaces.

Using figures 5 to 9, several embodiments are described of this first type of system for displaying augmented reality, virtual reality, augmented virtuality or any content from augmented reality to virtual reality.

**Figure 5** illustrates a particular embodiment of a system configured to decode, process and render immersive videos. The system comprises an immersive video rendering device 10, sensors 20, user inputs devices 30, a computer 40 and a gateway 50 (optional).

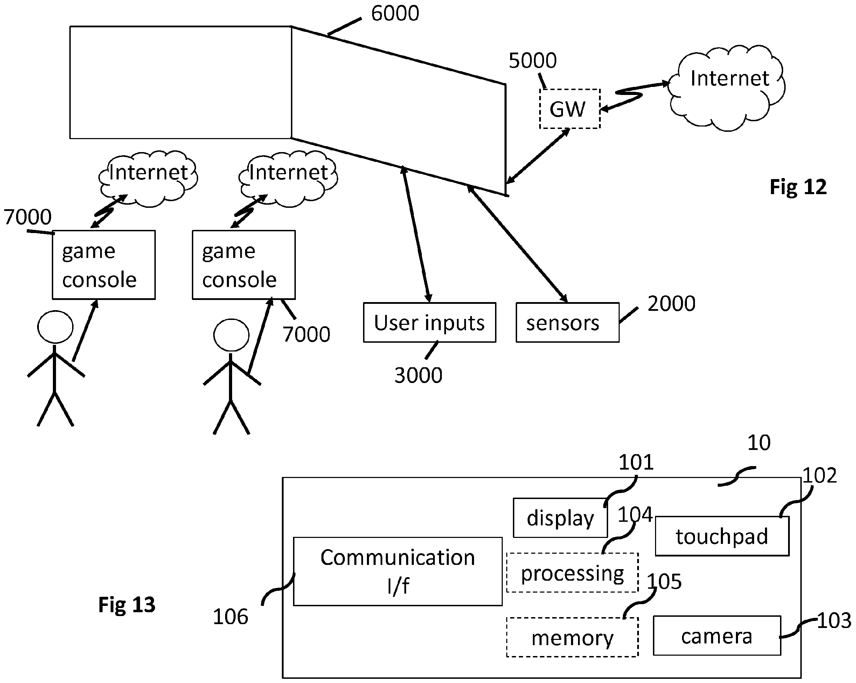

The immersive video rendering device 10, an example of which being illustrated on **Figure 13****,** comprises a display 101. The display is, for example of OLED or LCD type. The immersive video rendering device 10 is, for instance a HMD, a tablet or a smartphone. The device 10 may comprise a touch surface 102 (e.g. a touchpad or a tactile screen), a camera 103, a memory 105 in connection with at least one processor 104 and at least one communication interface 106. The at least one processor 104 processes the signals received from the sensors 20. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement. Data from sensors 20 and user input devices 30 can also be transmitted to the computer 40 which will process the data according to the input of these sensors.

Memory 105 includes parameters and code program instructions for the processor 104. Memory 105 can also comprise parameters received from the sensors 20 and user input devices 30. Communication interface 106 enables the immersive video rendering device to communicate with the computer 40. The Communication interface 106 of the processing device is wireline interfaces (for example a bus interface, a wide area network interface, a local area network interface) or wireless interfaces (such as an IEEE 802.11 interface or a Bluetooth® interface). Computer 40 sends data and optionally control commands to the immersive video rendering device 10. The computer 40 is in charge of processing the data, i.e. prepare them for display by the immersive video rendering device 10. Processing can be done exclusively by the computer 40 or part of the processing can be done by the computer and part by the immersive video rendering device 10. The computer 40 is connected to internet, either directly or through a gateway or network interface 50. The computer 40 receives data representative of an immersive video from the internet, processes these data (e.g. decodes them and possibly prepares the part of the video content that is going to be displayed by the immersive video rendering device 10) and sends the processed data to the immersive video rendering device 10 for display. In a variant, the system may also comprise local storage (not represented) where the data representative of an immersive video are stored, said local storage can be on the computer 40 or on a local server accessible through a local area network for instance (not represented).

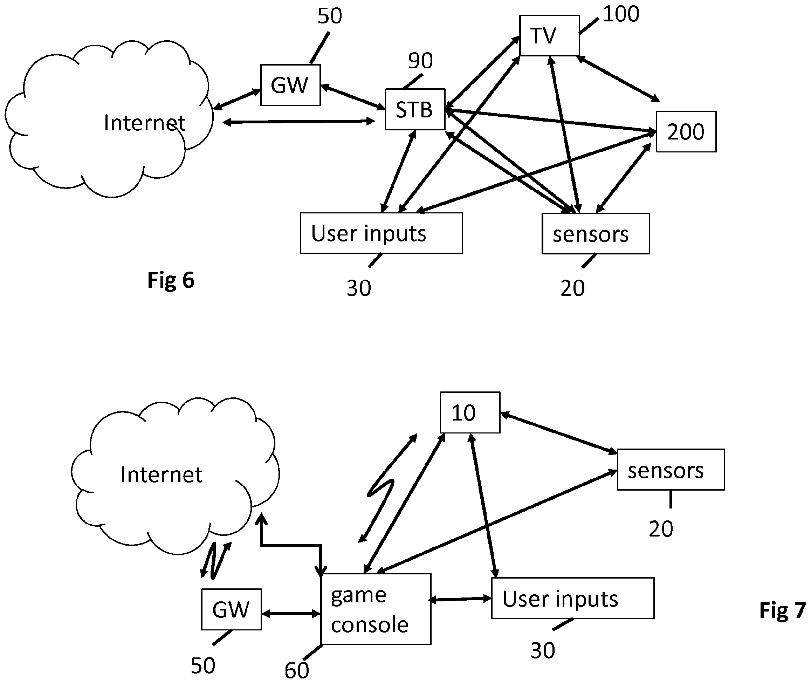

**Figure 6** shows a second embodiment. In this embodiment, a STB 90 is connected to a network such as internet directly (i.e. the STB 90 comprises a network interface) or via a gateway 50. The STB 90 is connected through a wireless interface or through a wired interface to rendering devices such as a television set 100 or an immersive video rendering device 200. In addition to classic functions of a STB, STB 90 comprises processing functions to process video content for rendering on the television 100 or on any immersive video rendering device 200. These processing functions are the same as the ones that are described for computer 40 and are not described again here. Sensors 20 and user input devices 30 are also of the same type as the ones described earlier with regards to Figure 6. The STB 90 obtains the data representative of the immersive video from the internet. In a variant, the STB 90 obtains the data representative of the immersive video from a local storage (not represented) where the data representative of the immersive video are stored.

**Figure 7** shows a third embodiment related to the one shown in Figure 2. The game console 60 processes the content data. Game console 60 sends data and optionally control commands to the immersive video rendering device 10. The game console 60 is configured to process data representative of an immersive video and to send the processed data to the immersive video rendering device 10 for display. Processing can be done exclusively by the game console 60 or part of the processing can be done by the immersive video rendering device 10.

The game console 60 is connected to internet, either directly or through a gateway or network interface 50. The game console 60 obtains the data representative of the immersive video from the internet. In a variant, the game console 60 obtains the data representative of the immersive video from a local storage (not represented) where the data representative of the immersive video are stored, said local storage can be on the game console 60 or on a local server accessible through a local area network for instance (not represented).

The game console 60 receives data representative of an immersive video from the internet, processes these data (e.g. decodes them and possibly prepares the part of the video that is going to be displayed) and sends the processed data to the immersive video rendering device 10 for display. The game console 60 may receive data from sensors 20 and user input devices 30 and may use them to process the data representative of an immersive video obtained from the internet or from the from the local storage.

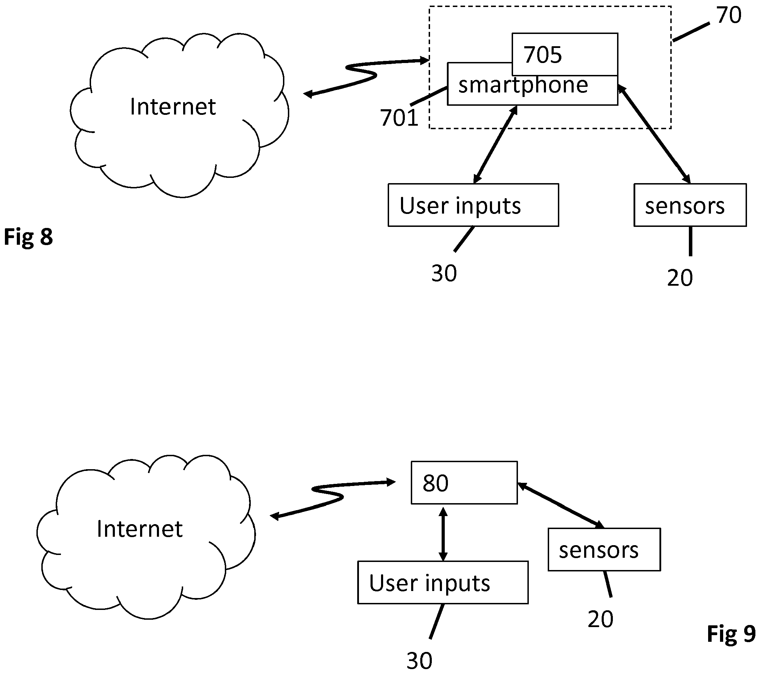

**Figure 8** shows a fourth embodiment of said first type of system where the immersive video rendering device 70 is formed by a smartphone 701 inserted in a housing 705. The smartphone 701 may be connected to internet and thus may obtain data representative of an immersive video from the internet. In a variant, the smartphone 701 obtains data representative of an immersive video from a local storage (not represented) where the data representative of an immersive video are stored, said local storage can be on the smartphone 701 or on a local server accessible through a local area network for instance (not represented).

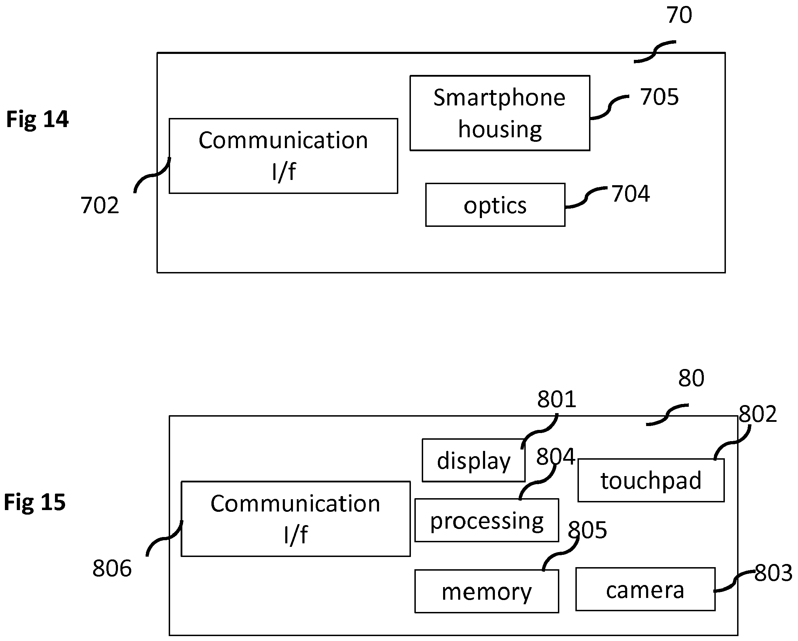

Immersive video rendering device 70 is described with reference to **Figure 14** which gives a preferred embodiment of immersive video rendering device 70. It optionally comprises at least one network interface 702 and the housing 705 for the smartphone 701. The smartphone 701 comprises all functions of a smartphone and a display. The display of the smartphone is used as the immersive video rendering device 70 display. Therefore no display other than the one of the smartphone 701 is included. However, optics 704, such as lenses, are included for seeing the data on the smartphone display. The smartphone 701 is configured to process (e.g. decode and prepare for display) data representative of an immersive video possibly according to data received from the sensors 20 and from user input devices 30. Some of the measurements from sensors are used to compute the pose of the device and to control the virtual camera. Sensors used for pose estimation are, for instance, gyroscopes, accelerometers or compasses. More complex systems, for example using a rig of cameras may also be used. In this case, the at least one processor performs image processing to estimate the pose of the device 10. Some other measurements are used to process the content according to environment conditions or user's reactions. Sensors used for observing environment and users are, for instance, microphones, light sensor or contact sensors. More complex systems may also be used like, for example, a video camera tracking user's eyes. In this case the at least one processor performs image processing to operate the expected measurement.

**Figure 9** shows a fifth embodiment of said first type of system in which the immersive video rendering device 80 comprises all functionalities for processing and displaying the data content. The system comprises an immersive video rendering device 80, sensors 20 and user input devices 30. The immersive video rendering device 80 is configured to process (e.g. decode and prepare for display) data representative of an immersive video possibly according to data received from the sensors 20 and from the user input devices 30. The immersive video rendering device 80 may be connected to internet and thus may obtain data representative of an immersive video from the internet. In a variant, the immersive video rendering device 80 obtains data representative of an immersive video from a local storage (not represented) where the data representative of an immersive video are stored, said local storage can be on the rendering device 80 or on a local server accessible through a local area network for instance (not represented).

An example of an immersive video rendering device 80 is illustrated on **Figure 15****.** The immersive video rendering device comprises a display 801. The display can be for example of OLED or LCD type, a touchpad (optional) 802, a camera (optional) 803, a memory 805 in connection with at least one processor 804 and at least one communication interface 806. Memory 805 comprises parameters and code program instructions for the processor 804. Memory 805 can also comprise parameters received from the sensors 20 and user input devices 30. Memory can also be large enough to store the data representative of the immersive video content. For this several types of memories can exist and memory 805 can be a single memory or can be several types of storage (SD card, hard disk, volatile or non-volatile memory...) Communication interface 806 enables the immersive video rendering device to communicate with internet network. The processor 804 processes data representative of the video in order to display them of display 801. The camera 803 captures images of the environment for an image processing step. Data are extracted from this step in order to control the immersive video rendering device.

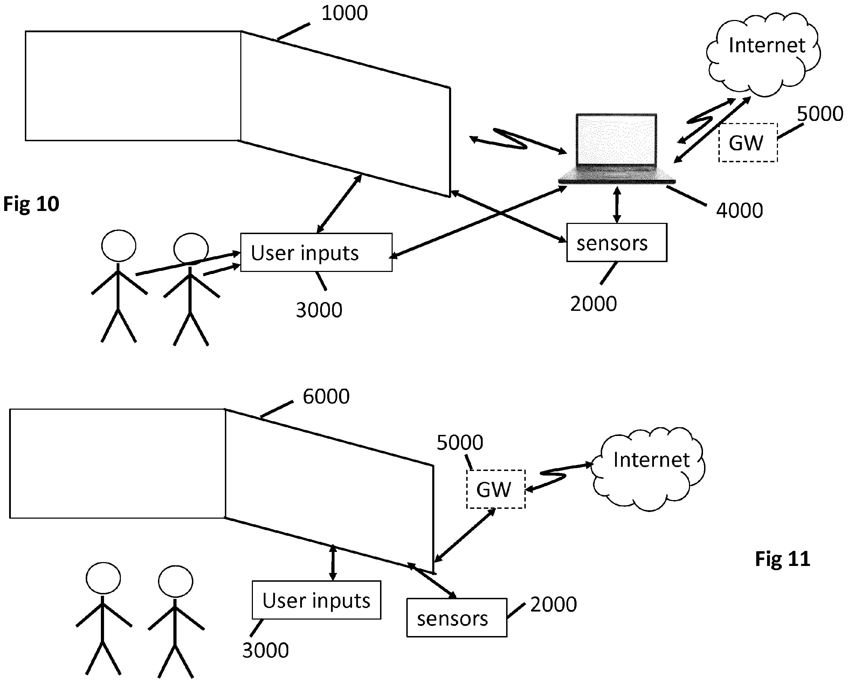

A second system, for processing augmented reality, virtual reality, or augmented virtuality content is illustrated in **figures 10 to 12****.** Such a system comprises an immersive wall.

**Figure 10** shows an example of a system of the second type. It comprises a display 1000 which is an immersive (projective) wall which receives data from a computer 4000. The computer 4000 may receive immersive video data from the internet. The computer 4000 is usually connected to internet, either directly or through a gateway 5000 or network interface. In a variant, the immersive video data are obtained by the computer 4000 from a local storage (not represented) where the data representative of an immersive video are stored, said local storage can be in the computer 4000 or in a local server accessible through a local area network for instance (not represented).

This system may also comprise sensors 2000 and user input devices 3000.The immersive wall 1000 can be of OLED or LCD type. It can be equipped with one or several cameras. The immersive wall 1000 may process data received from the sensor 2000 (or the plurality of sensors 2000). The data received from the sensors 2000 may be related to lighting conditions, temperature, environment of the user, e.g. position of objects.

The immersive wall 1000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

Sensors 2000 and user input devices 3000 data may also be transmitted to the computer 4000. The computer 4000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection.

Computer 4000 sends the processed data and optionally control commands to the immersive wall 1000. The computer 4000 is configured to process the data, i.e. preparing them for display, to be displayed by the immersive wall 1000. Processing can be done exclusively by the computer 4000 or part of the processing can be done by the computer 4000 and part by the immersive wall 1000.

**Figure 11** shows another example of a system of the second type. It comprises an immersive (projective) wall 6000 which is configured to process (e.g. decode and prepare data for display) and display the video content. It further comprises sensors 2000, user input devices 3000.

The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

This system may also comprise sensors 2000 and user input devices 3000.The immersive wall 6000 can be of OLED or LCD type. It can be equipped with one or several cameras. The immersive wall 6000 may process data received from the sensor 2000 (or the plurality of sensors 2000). The data received from the sensors 2000 may be related to lighting conditions, temperature, environment of the user, e.g. position of objects.

The immersive wall 6000 may also process data received from the user inputs devices 3000. The user input devices 3000 send data such as haptic signals in order to give feedback on the user emotions. Examples of user input devices 3000 are handheld devices such as smartphones, remote controls, and devices with gyroscope functions.

The immersive wall 6000 may process the video data (e.g. decoding them and preparing them for display) according to the data received from these sensors/user input devices. The sensors signals can be received through a communication interface of the immersive wall. This communication interface can be of Bluetooth type, of WIFI type or any other type of connection, preferentially wireless but can also be a wired connection. The immersive wall 6000 may comprise at least one communication interface to communicate with the sensors and with internet.

**Figure 12** illustrates a third embodiment where the immersive wall is used for gaming. One or several gaming consoles 7000 are connected, preferably through a wireless interface to the immersive wall 6000. The immersive wall 6000 receives immersive video data from the internet through a gateway 5000 or directly from internet. In a variant, the immersive video data are obtained by the immersive wall 6000 from a local storage (not represented) where the data representative of an immersive video are stored, said local storage can be in the immersive wall 6000 or in a local server accessible through a local area network for instance (not represented).

Gaming console 7000 sends instructions and user input parameters to the immersive wall 6000. Immersive wall 6000 processes the immersive video content possibly according to input data received from sensors 2000 and user input devices 3000 and gaming consoles 7000 in order to prepare the content for display. The immersive wall 6000 may also comprise internal memory to store the content to be displayed.

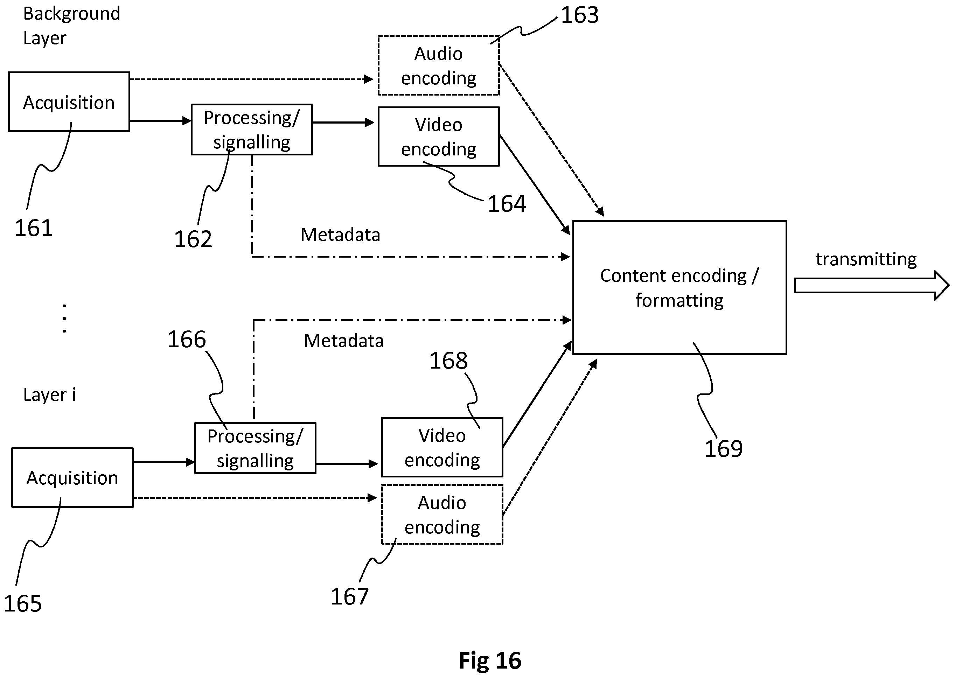

**Figure 16** shows a process of obtaining, encoding and/or formatting data representative of an omnidirectional video, according to a particular embodiment of the present principles.

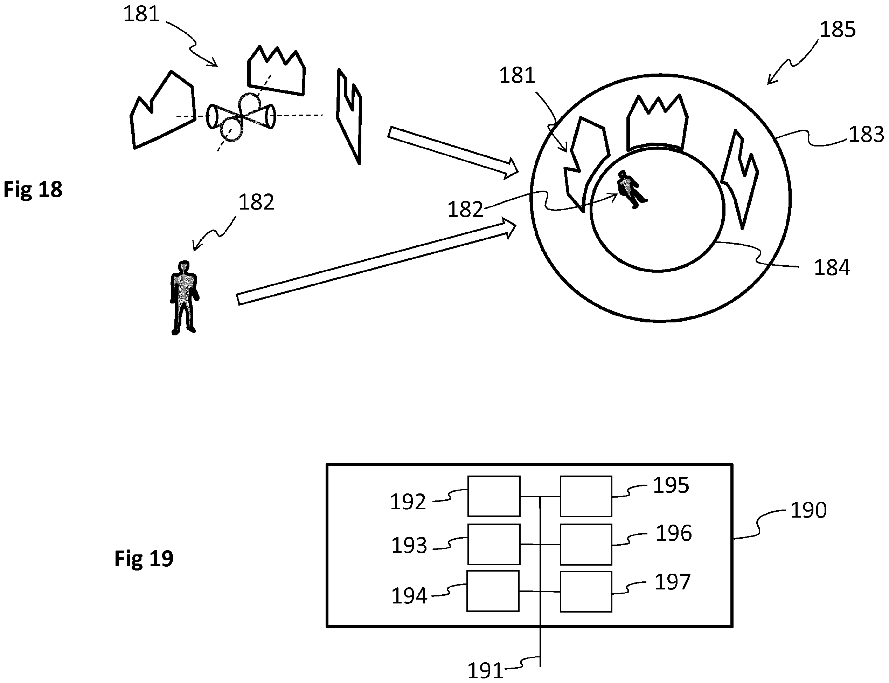

Operations 161 to 164 refer to background data, i.e. data that are intended to be used to form the background of the omnidirectional video that results from the compositing of the first video and from one or more second video comprising one or more foreground objects. An example of such an omnidirectional video is shown on figure 18. **Figure 18** illustrates a non-limitative example of an omnidirectional video 185 resulting from the combination of a first "flat" omnidirectional video 181 acquired with a plurality of cameras and of a second "flat" video 182. The first video 181 is mapped onto a first mapping surface 183 (e.g. a first sphere) and the second video is mapped on a second mapping surface 184 (e.g. a second sphere having a radius smaller than the radius of the first sphere). The first video corresponds to the background of the omnidirectional video 185 and the second video corresponds to the foreground of the omnidirectional video 185.

In an operation 161, a first video is acquired. The first video is an omnidirectional video of a scene acquired for example with an omnidirectional camera that is a camera with a 360-degree field of view in the horizontal plane or with a visual field that covers the entire sphere (4π steradians). The first video may be acquired with a rig of several camera that enables to acquire the whole sphere or part of it. According to a variant, the first video is not acquired but retrieved from the cloud, a library of omnidirectional videos or any storage unit or apparatus. An audio track associated with the first video may also be optionally acquired.

In an operation 162, the first video is processed. The first video may be for example stitched if acquired with a plurality of cameras. During operation 162, it is signalled to a video encoder under which format the first video may be encoded, for example according to H.264 standard or HEVC standard. During operation 162, it is further signalled which first mapping surface is to be used to represent the first video. The first mapping surface may be for example chosen by an operator from a list of available mapping surfaces, e.g. sphere, squished sphere, cylinder, cube, octahedron, icosahedron, truncated pyramid. Dimensions (i.e. size) and center point (defined with its coordinates x, y and z) associated with the selected first mapping surface may also be signalled. According to a variant, the first mapping surface (and associated dimensions and centre point) is determined by default by the system. For example, it may be decided that a first video representative of background information is mapped by default on a sphere having a determined radius and a determined centre point, thus requiring no input from the operator. The type of the first mapping surface, its dimensions and center points form advantageously a set of metadata associated with the first video.

In an operation 163, the sound information acquired with the first video, when any sound has been acquired, is encoded into an audio track according to a determined format, for example according to AAC (Advanced Audio Coding) standard, WMA (Windows Media Audio), MPEG-1/2 Audio Layer 3.

In an operation 164, the data of the first video is encoded into a first video track according to a determined format, for example according to H.264/MPEG-4 AVC: "*Advanced video coding for generic audiovisual Services*", SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265".

Operations 165 to 168 refer to foreground data and/or transparency data and/or shadow data, i.e. data that are intended to be used to form the foreground of the omnidirectional video that results from the compositing of the first video and from one or more second video comprising one or more foreground objects and/or to form shadow(s) on the background resulting from the foreground objects.

In an operation 165, a second video is acquired. The second video corresponds to an omnidirectional video or to a standard video, i.e. a video with a standard field of view. According to a variant, the second video is composed by an operator, for example when the second video represent one or more shadows to be overlaid onto the background of the omnidirectional video. According to another variant, the second video is not acquired but retrieved from the cloud, a library of omnidirectional videos or any storage unit or apparatus. An audio track associated with the second video may also be optionally acquired.

In an operation 166, the second video is processed. Chroma-key operation is for example performed on the second video to extract transparency information associated with the second video. When the foreground object(s) of the second video is(are) acquired on a background having a uniform and distinct color (e.g. green or blue), chroma-key operation consists in classifying the pixels of the images of the second video according to their color and to associated a value comprised between 0 and 255 for example with each pixel, depending on the color associated with the pixel. This value is called alpha value and is representative of transparency. The transparency information obtained from the second video and associated with the second video is used when compositing the second video with another video, e.g. the first video. The background of the second video (e.g. the parts of the second video having blue or green pixels) is usually assigned the value 0 and will be removed when combining the second video with the first video, the background of the second video being fully transparent. In contrast, the foreground object(s) of the second video are assigned an alpha value equal or close to 1 and is considered as being opaque. As a result, when combining the second video with the first video, the foreground object(s) of the second video will appear in the omnidirectional video resulting from the combining on the background obtained from the first video.

According to a variant, the second video is further processed after the chroma-key operation to assign to each pixel of the background (i.e. each pixel having a color information corresponding to the background, e.g. a blue or green color information) a determined color value (e.g. blue or green) that has a fixed value and that is the same for each and every pixel of the background. Such a further processing enables to better control the background of the second video to improve the background removal when compositing. The determined color value may be stored and signalled as a metadata.

During operation 166, it may also be signalled to a video encoder under which format the second video may be encoded, for example according to H.264 standard or HEVC standard. When transparency information has been obtained from the second video, it may also be signalled to the video encoded under which format the transparency information may be encoded. For example, HEVC standard proposes a specific configuration to efficiently encode grayscale video as the transparency information. During operation 166, it is further signalled which second mapping surface is to be used to represent the second video. The second mapping surface may be for example chosen by an operator from a list of available mapping surfaces, e.g. sphere, squished sphere, cylinder, cube, octahedron, icosahedron, truncated pyramid. Dimensions (i.e. size) and center point (defined with its coordinates x, y and z) associated with the selected second mapping surface may also be signalled. According to a variant, the second mapping surface (and associated dimensions and centre point) is determined by default by the system. For example, it may be decided that a second video representative of foreground information is mapped by default on a sphere having a determined radius and a determined centre point, thus requiring no input from the operator. The type of the second mapping surface, its dimensions and center points form advantageously a set of metadata associated with the second video.

In an operation 167, the sound information acquired with the second, when any sound has been acquired, is encoded into an audio track according to a determined format, for example according to AAC (Advanced Audio Coding, ISO/IEC 14496-10, Information technology - Coding of audio-visual objects - Part 10: Advanced Video Coding), WMA (Windows Media Audio), MPEG-1/2 Audio Layer 3.

In an operation 168, the data of the second video is encoded into a second video track according to a determined format, for example according to H.264/MPEG-4 AVC: "*Advanced video coding for generic audiovisual Services*", SERIES H: AUDIOVISUAL AND MULTIMEDIA SYSTEMS, Recommendation ITU-T H.264, Telecommunication Standardization Sector of ITU, February 2014 or according to HEVC/H265: "ITU-T H.265 TELECOMMUNICATION STANDARDIZATION SECTOR OF ITU (10/2014), SERIES H: AUDIOVISUAL AND MULTIMEDIA SYSTEMS, Infrastructure of audiovisual services - Coding of moving video, High efficiency video coding, Recommendation ITU-T H.265". When data representative of transparency is obtained from the second video, the data representative of transparency may be encoded into a third video track using the same format as the one used to encode the associated second video.

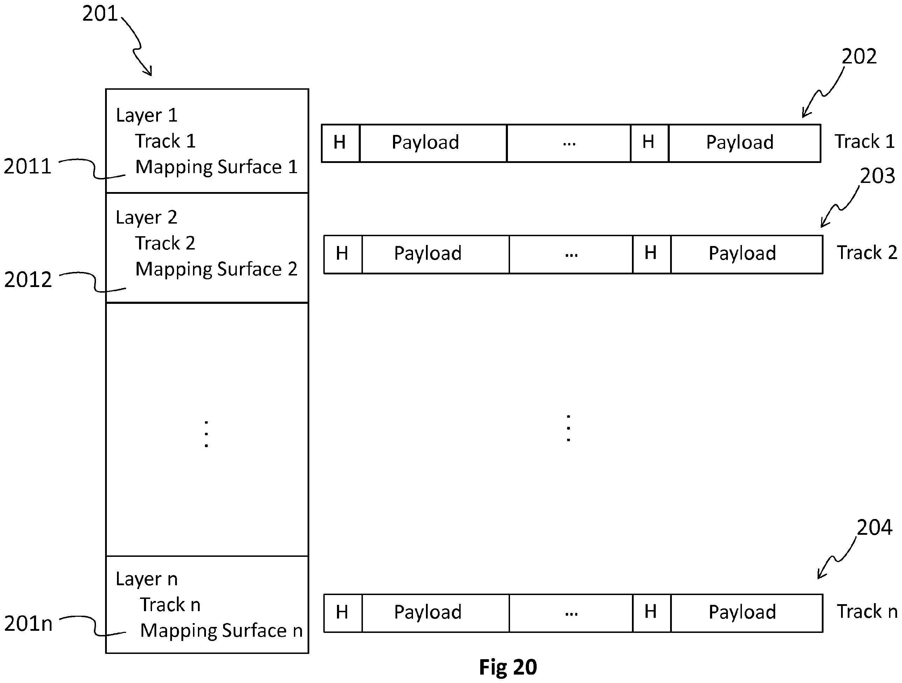

In an operation 169, the data comprised in the first, second and/or video tracks are encoded with the signalling information and the metadata obtained from the operations 162 and 166. The encoding process results in a container comprising one or more bitstream having a determined syntax, as described with more details with regard to **figures 20 to 25****.**

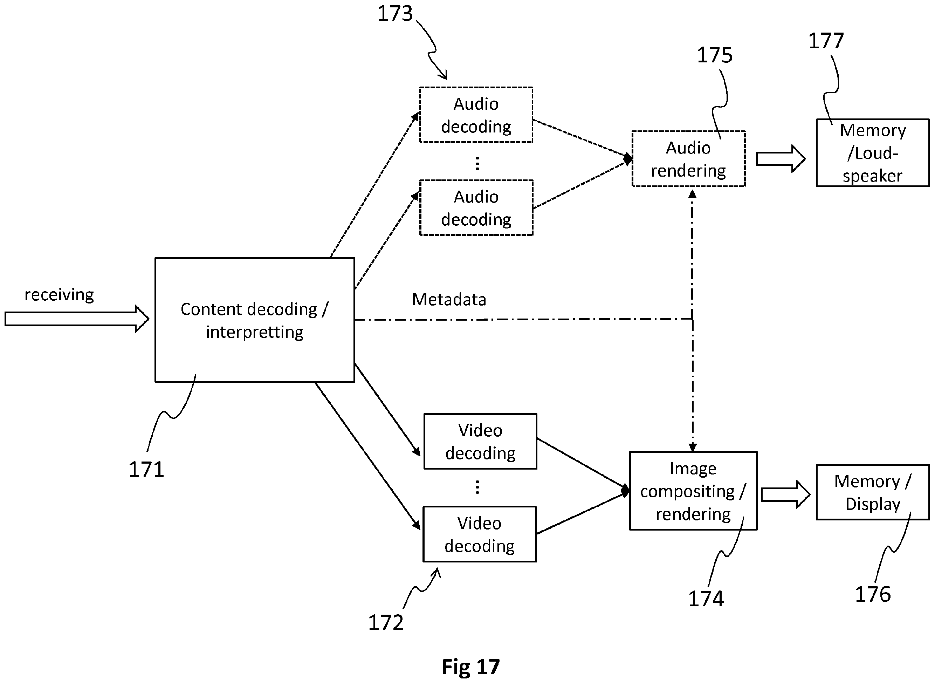

The bitstream(s) obtained at operation 169 is (are) stored in a memory device and/or transmitting to be decoded and process, e.g. to render the data representative of the omnidirectional video comprised in such bitstream(s), as described with more details with regard to **figure 17****.**

**Figures 20 to 25** each shows the syntax of a set of one or more bitstreams, according to example embodiments of the present principles.

**Figure 20** shows the syntax of a set of one or more bitstreams, according to a first example. A bitstream 201 is represented with a plurality of layers 2011, 2012 to 201 n, n being an integer greater than or equal to 2. Each layer may be seen as a syntax element or as a part of a syntax element when the bitsream 201 is considered as being a syntax element.

The first layer with 'ID_{layer} = 1' 2011 comprises an information identifying the video track the first layer refers to or points to. The information identifying the video track may take the form of an index value (e.g. an integer of one, two, four or more digits) or of an address pointing to the video tracks. The first layer 2011 refers to the first video track 202 that comprises data representative of the background. The data of the first video comprised in the first video track are organized under the form of one or more data packets, each data packet comprising a header H comprising signalling information and payload data. The first layer 2011 also comprises data representative of a first mapping surface associated with the first video of the first video track 202. The data representative of the first mapping surface comprises for example one or more of the following parameters:
- the type of the mapping surface (e.g. a sphere or a cube) identified with an integer, e.g. 3 for a sphere;
- the dimensions of the mapping surface, e.g. the radius for a sphere;
- coordinates of the surface default front center point that corresponds for example to the point of intersection between the positive X-axis (of an orthonormal space comprising 3 axes X, Y and Z) and the surface of the mapping surface where the direction of the positive X-axis is perpendicular to the front surface of the mapping surface.

The second layer with 'ID_{layer} = 2' 2012 comprises an information identifying the video track the second layer refers to or points to. The second layer 2012 refers to the second video track 203 that comprises data representative of foreground object(s). The data of the second video comprised in the second video track 203 are organized under the form of one or more data packets, each data packet comprising a header H comprising signalling information and payload data. The second layer 2012 also comprises data representative of a second mapping surface associated with the second video of the second video track 202. The data representative of the second mapping surface comprises for example one or more of the following parameters:
- the type of the mapping surface (e.g. a sphere or a cube) identified with an integer, e.g. 2 for a squished sphere;
- the dimensions of the mapping surface, e.g. squish start pitch top, squish start pitch bottom, squish ratio top, squish ratio bottom for a squished sphere;
- coordinates of the center point of the mapping surface;
- coordinates of the surface default front center point. The coordinates may be expressed in the same space as the one used for the first mapping surface. According to a variant, the coordinates of the center point of the second mapping surface are expressed with offset with regard to the coordinates of the center point of the first mapping surface.
The second mapping surface is advantageously different from the first mapping surface, i.e. one or more of the abovementioned parameters is/are different between the first mapping surface and the second mapping surface.

The n^{th} layer with 'ID_{layer} = n' 201 n comprises an information identifying the video track the n^{th} layer refers to or points to. The n^{th} layer 201 n refers for example to the n^{th} video track 204 that comprises data representative of foreground object(s). The description of the n^{th} layer and of the n^{th} video track is similar to the description of the second layer 2012 and of the second video track 203. The n^{th} mapping surface may be the same as the second mapping surface or different from the second mapping surface, depending on where the foreground object(s) of the n^{th} video are located with regard to the foreground object(s) of the second video.

According to an optional variant, each layer 2011 to 201 n may comprises additional information. A layer may for example comprises:
- an information representative of the resolution of the video the layer refers to; and/or
- a priority information associated with the layer: each layer may receive a priority level that may be used when decoding and/or rendering the data. Depending on the available computing resource at the decoder/rendered stage, some video may be decoded/rendered or not depending on the priority level of the layer they are associated with. A typical example is a limited number of decoders that does not allow the decoding of all the video tracks; and/or

- a rendering order that may be used at the renderer stage to determine which video should be rendered in which order;
- an information representative of the type of the layer, e.g. layer representative of background, layer representative of foreground, layer representative of transparency information, layer representative of shadow, such an information being for example coded on 2 or 4 bits;
- a pointer to another layer, for example a layer representative of foreground may point to another layer representative of transparency information associated with said foreground or a layer representative of background may point to another layer representative of shadow associated with said background.

According to another optional variant, the bitstream 201 may further comprises at an upper level an information indicating if the bitstream 201 comprises only a background layer or a background layer with additional layer(s). Such information may be coded on 1 bit, with the value '0' indicating for example that the bitstream 201 only comprises one layer (the background layer) and the value '1' indicating 201 comprises the background layer and additional layer(s).

According to a further optional variant, the bitstream 201 may further comprises at an upper level an information indicating the number of layers comprised in the bitstream (either the total number of layers including the background layer or the number of additional layers, i.e. the number of layers in addition to the background layer).

Each video track 202, 203, 204 may be seen as an additional bitstream. According to a variant, the bitstream 201 and the additional bitstreams 202, 203, 204 form a single bitstream. The number of video tracks may be equal to or different from the number of layers.

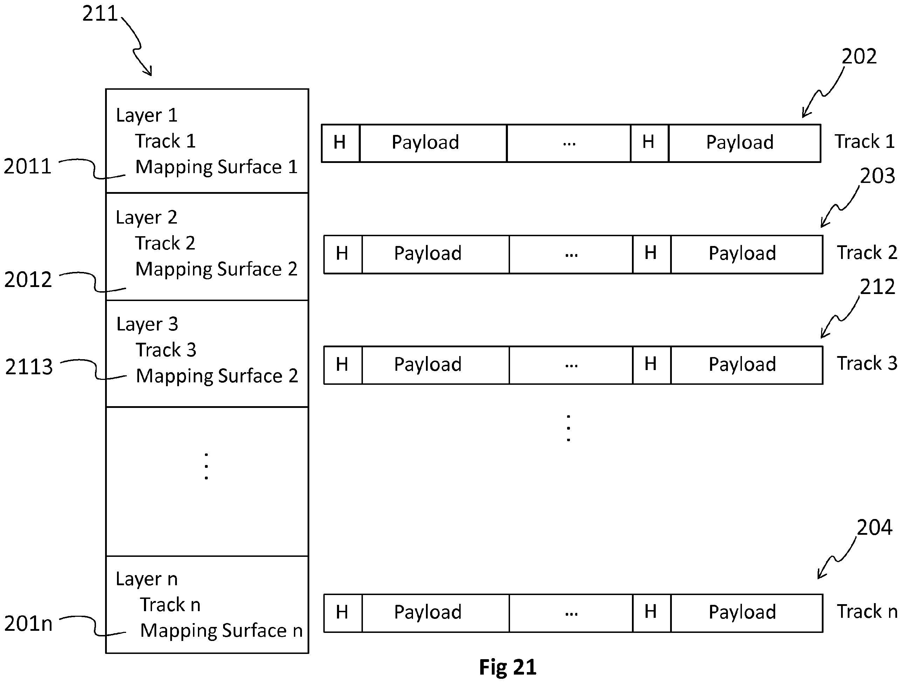

**Figure 21** shows the syntax of a set of one or more bitstreams, according to a second example. A bitstream 211 is represented with a plurality of layers 2011, 2012, 2113 to 201 n, n being an integer greater than or equal to 3.

The first layer 2011, the second layer 2012 and the n^{th} layer 201 n are identical to the first layer 2011, the second layer 2012 and the n^{th} layer 201 n described with regard to figure 20.

The third layer with 'ID_{layer}= 3' 2113 comprises an information identifying the video track the third layer refers to or points to. The third layer 2113 refers to the third video track 212 that comprises data representative of transparency, for example grayscale values encoded in the 'Y' channel of the color space YCbCr. The third layer 2113 also comprises data representative of the second mapping surface associated with the second video of the second video track 202 and with the third video of the third video track 212. Both the second layer 2012 and the third layer 2113 describe the same second mapping surface as the transparency data comprised in the third video track 212 is associated with (and obtained from) the data comprised in the second video track 203.

The transparency information is encoded in a same way as the first video (background) and as the second video (foreground) it is associated with, using the same syntax. It has the advantage of simplifying the encoding process as each layer is encoded in a same way with a same syntax, whatever the data (background, foreground, and transparency) it represents or refers to.

The third layer 2113 may also comprise an information indicating the type of the third layer, i.e. a layer representative of transparency. According to the example of figure 21, the second layer may comprise an additional information indicating that the transparency associated with the foreground the second layer is representative of is comprised in the third layer 2113.

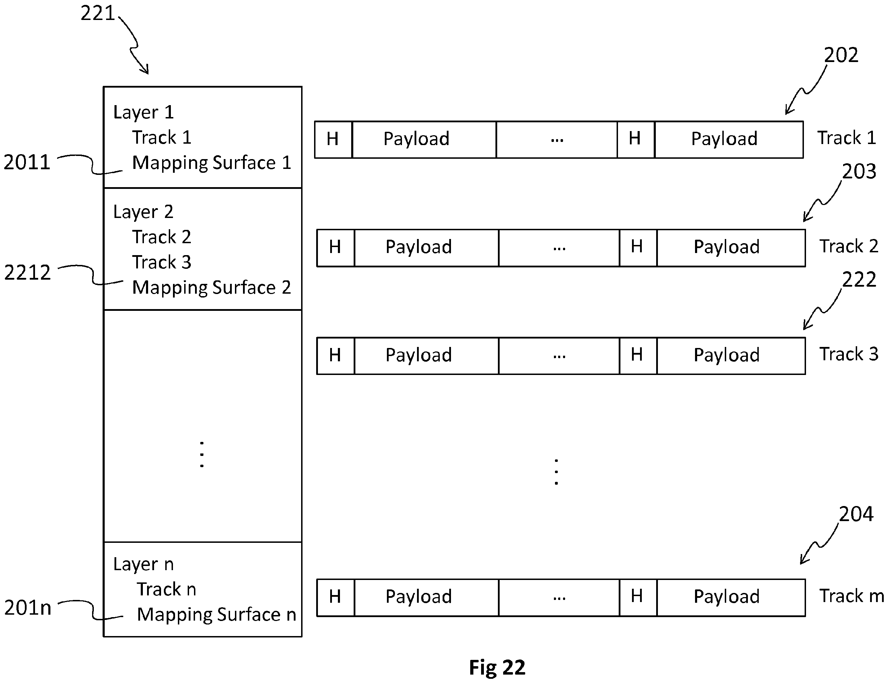

**Figure 22** shows the syntax of a set of one or more bitstreams, according to a second example. A bitstream 221 is represented with a plurality of layers 2011, 2012, 2113 to 201 n, n being an integer greater than or equal to 2.

The first layer 2011 and the n^{th} layer 201 n are identical to the first layer 2011 and the n^{th} layer 201 n described with regard to figure 20. Figures 22 shows a variant of figure 21 for encoding transparency information associated with a foreground video.

The second layer with 'ID_{layer} = 2' 2212 comprises information identifying the video track the second layer refers to or points to. The second layer 2212 refers to two different video tracks, namely the second video track 203 that comprises data representative of foreground object(s) and a third video track 222 that comprises data representative of transparency, such as the third video track 212 described with regard to figure 21. The second layer 2212 also comprises data representative of a second mapping surface associated with the second video of the second video track 202 and with the third video of the third video track 222, the third video comprising the transparency information associated with the second video.

According to this example, the second layer 2212 may additionally comprise an information on the type of the second layer, i.e. a layer representative of foreground and transparency.

The variant of figure 22 has the advantage of minimizing the data to be encoded into the bitstream 221 with regard to the number of data to be encoded into the bitstream 211 of figure 21, the data representative of the second mapping surface being encoded only once while the data representative of the second mapping surface is encoded twice in the bitstream 211, one time for the second layer 2012 and one time for the third layer 2113.

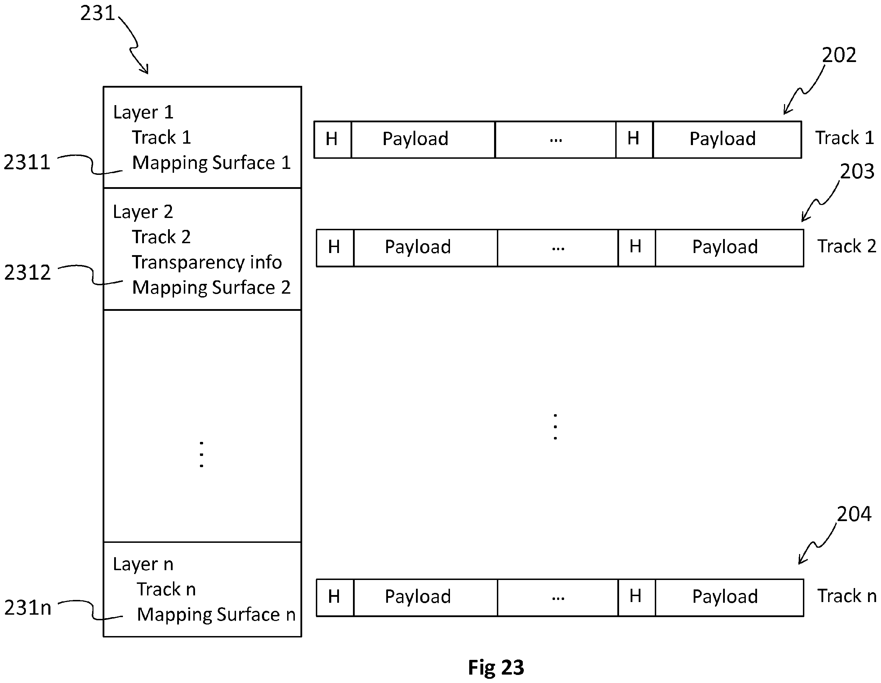

**Figure 23** shows the syntax of a set of one or more bitstreams, according to a second example. A bitstream 231 is represented with a plurality of layers 2011, 2012, 2113 to 201 n, n being an integer greater than or equal to 2.

The first layer 2011 and the n^{th} layer 201 n are identical to the first layer 2011 and the n^{th} layer 201 n described with regard to figure 20. Figures 23 shows a variant of figures 21 and/or 22 for encoding transparency information associated with a foreground video.

The second layer with 'ID_{layer} = 2' 2312 comprises information identifying the video track the second layer refers to or points to. The second layer 2212 refers to the second video track 203 that comprises data representative of foreground object(s). The second layer 2312 further comprises information representative of transparency. The transparency information may correspond to the color value of a pixel of the background of second video or to coordinates x, y of such a pixel of the background within the second video. Such a transparency information may be used at the decoding/rendering stage for the chroma-key operation. Knowing the color value of the background of the second video, the decoder/renderer may be able to retrieve the transparency information. The second layer 2212 also comprises data representative of a second mapping surface associated with the second video of the second video track 202.

According to a variant, the transparency information corresponds to a chroma-key shader, i.e. a program intended to be executed by GPUs at the rendering stage, the chroma-key shader comprising the instructions and parameters needed by the renderer to perform the chroma-key operation.

The variant of figure 22 has the advantage of minimizing the data to be encoded into the bitstreams 231, 202, 203 and 204 as the transparency information corresponds to a color value or to coordinates of a pixels in comparison to a grayscale video to be transmitted as described with regard to figures 21 and 22.

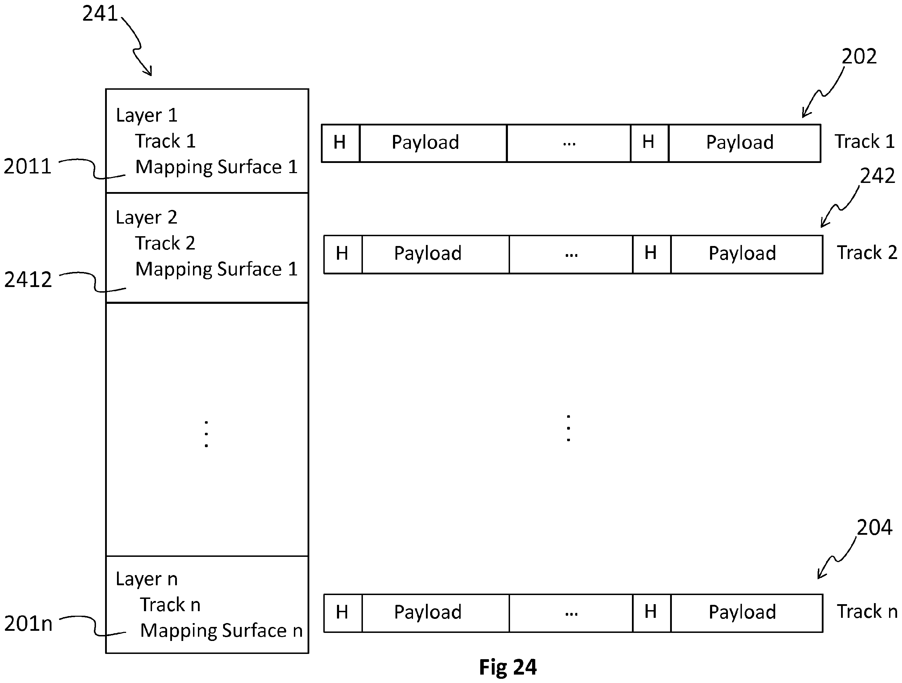

**Figure 24** shows the syntax of a set of one or more bitstreams, according to a second example. A bitstream 241 is represented with a plurality of layers 2011, 2412 to 201 n, n being an integer greater than or equal to 2.

The first layer 2011 and the n^{th} layer 201 n are identical to the first layer 2011 and the n^{th} layer 201 n described with regard to figure 20.

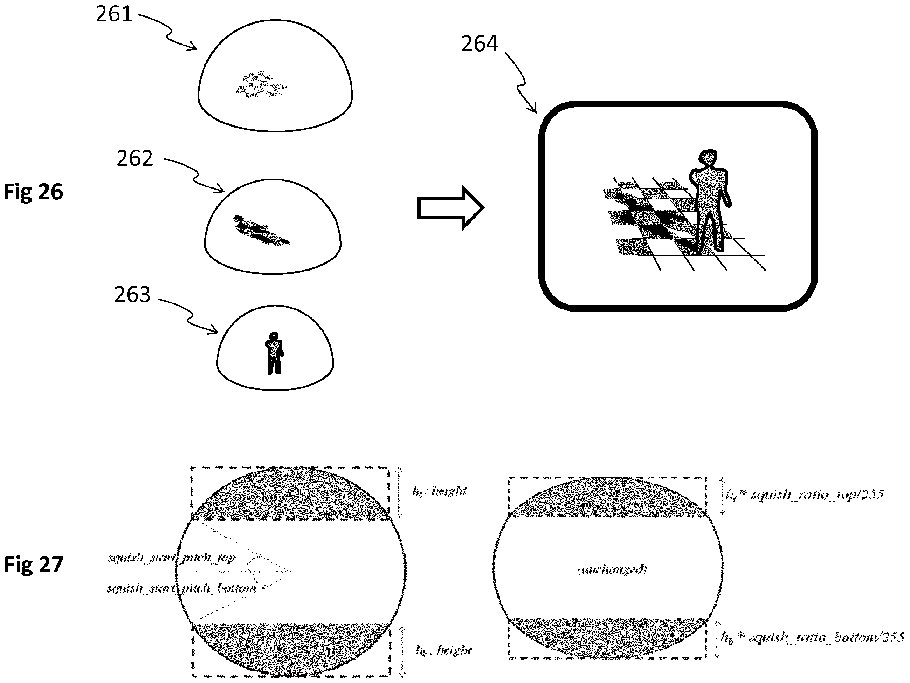

The second layer with 'ID_{layer}= 2' 2412 comprises an information identifying the video track the second layer 2412 refers to or points to. The second layer 2113 refers to the second video track 242 that comprises data representative of shadow. According to a first example, the second video comprises grayscale values encoded for example in the 'Y' channel of the color space YCbCr. The grayscale value are combined with the data of the first video representative of background as a mixing coefficient to vary the luminance of the pixels of the first video. Areas of the first video comprising shadow are darkened while areas of the first video not comprising any shadow are not changed, meaning that the grayscale value are close to 0 in areas of the second video corresponding to the shadows while the grayscale values are close to 1 or equal to 1 in areas of the second video not comprising any shadow. According to a second example, the second video comprises video information (i.e. color information for the 3 channels used to encode the video, either RGB or YCrCb) associated with a key for the alpha blending of the second video with the first video. The second example is illustrated on **figure 26.** Figure 26 shows a video (or an image of the video) 262 comprising an object representing a shadow, the video 262 mixing the shadow that is formed by an object of a foreground video 263 on the corresponding part of the background video 261 with the video information of the corresponding part of the background video 261 (i.e. the floor), the result of the compositing (background video + shadow video + foreground video) being illustrated with the image 264.

The second layer 2412 also comprises data representative of the first mapping surface associated with the first video of the first track video 202 comprising the background information. Both the first layer 2011 and the second layer 2412 describe the same first mapping surface as the shadow data comprised in the second video track 242 is associated with the first video comprised in the first video track 202, the shadow induced by a foreground object being formed on the background.

The first mapping surface is advantageously a squished sphere as shown in **figure 27**, the upper part and the lower part of the sphere being squished, i.e. deformed, to correspond to the topology of the scene of the background where the shadow has to be added. The first mapping surface used to represent a scene comprising a shadow may be any surface deformed in the areas of the surface where the shadow is to be added.

According to this example, the second layer 2412 may also comprise an information indicating the type of the third layer, i.e. a layer representative of shadow. According to the example of figure 24, the first layer may comprise an additional information indicating that the shadow associated with the background the first layer is representative of is comprised in the second layer 2412.

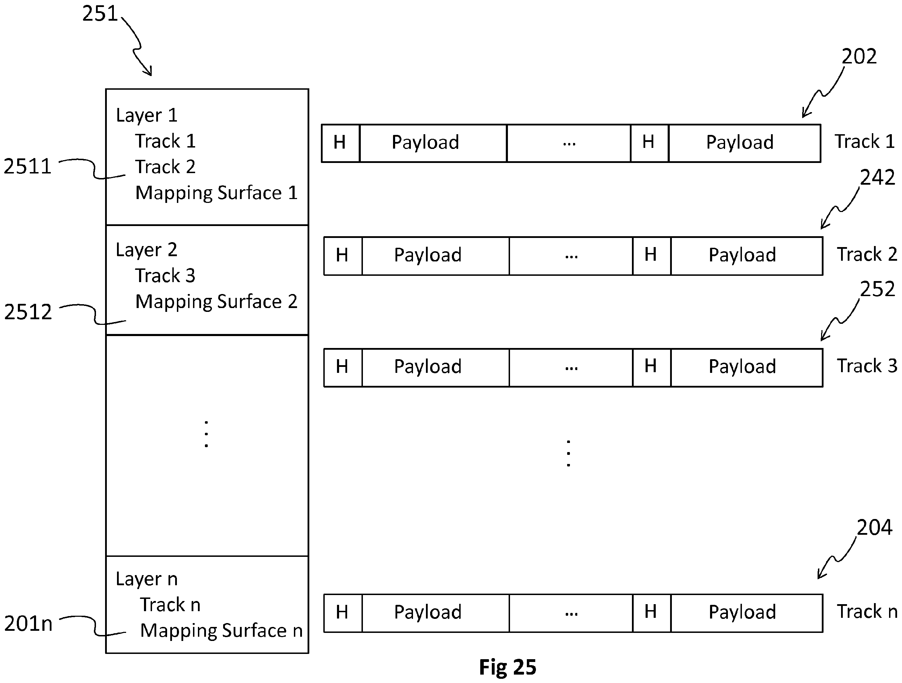

**Figure 25** shows the syntax of a set of one or more bitstreams, according to a second example. A bitstream 251 is represented with a plurality of layers 2511, 2512 to 201 n, n being an integer greater than or equal to 2.

The n^{th} layer 201 n is identical to the n^{th} layer 201 n described with regard to figure 20. Figure 25 shows a variant of figure 24 for encoding shadow information associated with a background video.

The first layer with 'ID_{layer} = 1' 2511 comprises an information identifying the video track the first layer refers to or points to. The information identifying the video track may take the form of an index value (e.g. an integer of one, two, four or more digits) or of an address pointing to the video tracks. The first layer 2511 refers to the first video track 202 that comprises data representative of background. The first layer 2511 also refers to the second video track 242 that comprises data representative of shadow, as in the second video track 242 described with regard to figure 24.

The first layer 2011 also comprises data representative of a first mapping surface associated with the first video of the first video track 202 and with the second video of the second video track 242. The data representative of the first mapping surface comprises for example one or more of the following parameters:
- the type of the mapping surface (e.g. a squished sphere);
- the dimensions of the mapping surface;
- coordinates of the surface default front center point.

The second layer with 'ID_{layer} = 2' 2512 comprises an information identifying the video track the second layer refers to or points to. The second layer 2512 refers to the third video track 252 that comprises data representative of foreground object(s) generating the shadow on the background video. The second layer 2512 also comprises data representative of a second mapping surface associated with the third video of the third video track 252, which may be different from the first mapping surface, e.g. different in dimensions and/or in location. According to an advantageous embodiment, the second mapping surface is the same as the first mapping surface.

**Figure 17** shows a process of obtaining, decoding and/or interpreting data representative of an omnidirectional video from the one or more bitstreams obtained from the process of figure 16, according to a particular embodiment of the present principles.

In an operation 171, the syntax elements of the bitstreams obtained at operation 169 (examples of which being shown on figures 20 to 25) are interpreted and decoded to then decode the data encoded in the video tracks and/or in the audio tracks in operations 172 and 173.

In an operation 174, a final omnidirectional video is composited and optionally rendered using the decoded data of the first video representative of the background and of the second video(s) representative of the foreground object(s) / shadows, using the transparency information associated with these second videos when needed.

In an operation 176, the composited omnidirectional video is stored in a memory device. The composited omnidirectional video, or part of it, may be displayed on a display device such as a HMD.

In an operation 175, audio information is rendered from the decoded audio tracks for storage in a memory device or play on loudspeaker in an operation 177.

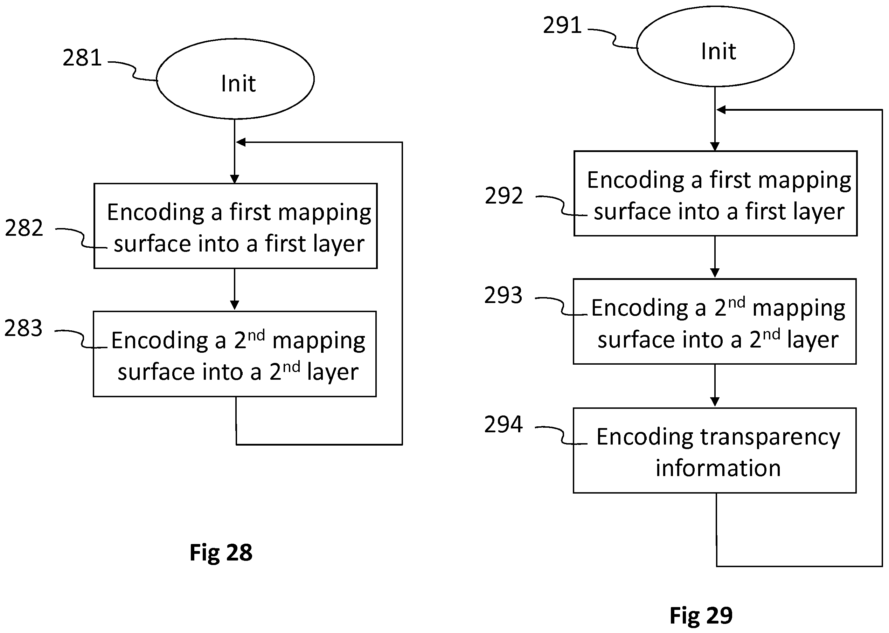

**Figure 19** shows a hardware embodiment of an apparatus 190 configured to implement methods described in relation with **figures 28 to 33****.** In this example, the device 190 comprises the following elements, connected to each other by a bus 191 of addresses and data that also transports a clock signal:
- a microprocessor 192 (or CPU), which is, for example, a DSP (or Digital Signal Processor);
- a non-volatile memory of ROM (Read Only Memory) type 193;
- a Random Access Memory or RAM 194;
- an I/O interface 195 for reception of data to transmit, from an application; and
- a graphics card 196 which may embed registers of random access memory;
- a power source 197.

In accordance with an example, the power source 197 is external to the device. In each of mentioned memory, the word « register » used in the specification may correspond to area of small capacity (some bits) or to very large area (e.g. a whole program or large amount of received or decoded data). The ROM 193 comprises at least a program and parameters. The ROM 193 may store algorithms and instructions to perform techniques in accordance with present principles. When switched on, the CPU 192 uploads the program in the RAM and executes the corresponding instructions.

RAM 194 comprises, in a register, the program executed by the CPU 192 and uploaded after switch on of the device 190, input data in a register, intermediate data in different states of the method in a register, and other variables used for the execution of the method in a register.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), set-top-boxes and other devices that facilitate communication of information between end-users.

In accordance with an example of encoding data representative of an omnidirectional video into a bitstream as illustrated on **figures 28 to 30****,** data are obtained from a source. For example, the source belongs to a set comprising:
- a local memory 193, 194 or 196, e.g. a video memory or a RAM (or Random Access Memory), a flash memory, a ROM (or Read Only Memory), a hard disk ;
- a storage interface 195, e.g. an interface with a mass storage, a RAM, a flash memory, a ROM, an optical disc or a magnetic support; and
- a communication interface 195, e.g. a wireline interface (for example a bus interface, a wide area network interface, a local area network interface) or a wireless interface (such as a IEEE 802.11 interface or a Bluetooth® interface).

According to one particular embodiment, the algorithms implementing the steps of a method of encoding data representative of an omnidirectional video into a bitstream as illustrated on **figures 28 to 30** are stored in a memory GRAM of the graphics card 196 associated with the device 190 implementing these steps. According to a variant, a part of the RAM 194 is assigned by the CPU 192 for storage of the algorithms. These steps lead to the generation of a video stream that is sent to a destination belonging to a set comprising a local memory, e.g. a video memory 194, a RAM 194, a ROM 193, a flash memory 193 or a hard disk 193, a storage interface 195, e.g. an interface with a mass storage, a RAM, a ROM, a flash memory, an optical disc or a magnetic support and/or received from a communication interface 195, e.g. an interface to a point to point link, a bus, a point to multipoint link or a broadcast network.

In accordance with examples, device 190 being configured to implement a method of encoding data representative of an omnidirectional video into a bitstream as illustrated on **figures 28 to 30****,** belongs to a set comprising:
- a mobile device ;
- a communication device ;
- a game device ;
- a tablet (or tablet computer) ;
- a laptop ;
- an encoding chip;
- a still picture server; and
- a video server (e.g. a broadcast server, a video-on-demand server or a web server).

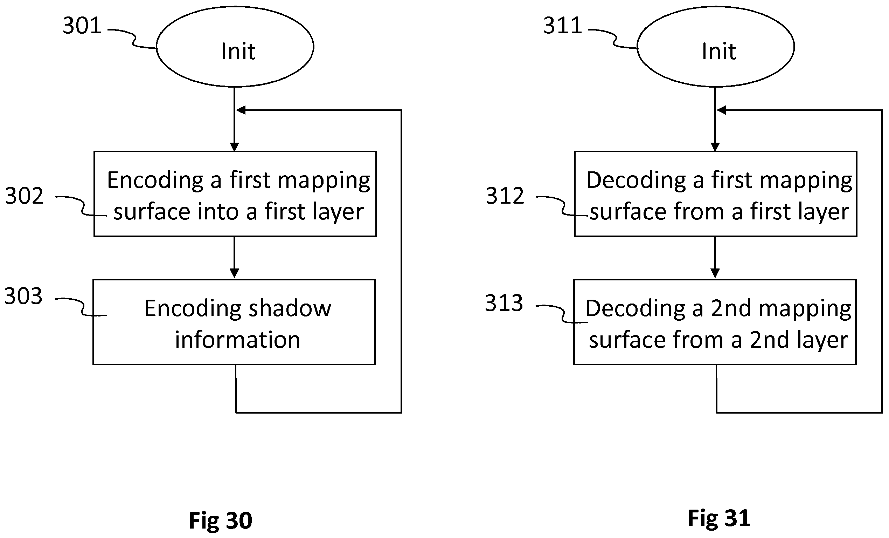

According to one particular embodiment, the algorithms implementing the steps of a method of decoding data representative of an omnidirectional video into a bitstream as illustrated on **figures 31 to 33** are stored in a memory GRAM of the graphics card 96 associated with the device 190 implementing these steps. According to a variant, a part of the RAM 194 is assigned by the CPU 192 for storage of the algorithms. These steps lead to the composition of a video that is sent to a destination belonging to a set comprising:
- a mobile device ;
- a communication device ;
- a game device ;
- a set-top-box;
- a TV set;
- a tablet (or tablet computer) ;
- a laptop ;
- a display and
- a decoding chip.

**Figure 28** illustrates a method for encoding data representative of an omnidirectional video implemented for example in a device 190 (described with regard to figure 19), according to a non-restrictive embodiment of a first aspect of the present principles.

In a step 281, the different parameters of the device 190 are updated. In particular, the data associated with the first and second videos are initialised in any way.

In a step 282, data representative of a first mapping surface is encoded into a first layer of a bitstream. The first layer is associated with and refers to a first video track that comprises data of a first video that corresponds to the background data of the omnidirectional video.

In a step 283, data representative of a second mapping surface is encoded into a second layer of the bitstream. The second layer is associated with and refers to a second video track that comprises data of a second video that corresponds to the foreground data or to at least a part of the foreground data of the omnidirectional video. The second mapping surface is advantageously different from the first mapping surface, for example the first and second mapping surfaces have different dimensions and/or are centred at different origins.

According to an optional variant, data representative of additional second mapping surfaces may be added into additional second layers of the bitstream, each additional second layer referring to a video track comprising data of a video corresponding to at least a part of the foreground of the omnidirectional video.

**Figure 31** illustrates a method for decoding data representative of an omnidirectional video implemented for example in a device 190 (described with regard to figure 19), according to a non-restrictive embodiment of a first aspect of the present principles.

In a step 311, the different parameters of the device 190 are updated. In particular, the data associated with the omnidirectional video is initialised in any way.

In a step 312, data representative of a first mapping surface is decoded from a first layer of a bitstream. The first layer is associated with and refers to a first video track that comprises data of a first video that corresponds to the background data of the omnidirectional video.

In a step 313, data representative of a second mapping surface is decoded from a second layer of the bitstream. The second layer is associated with and refers to a second video track that comprises data of a second video that corresponds to the foreground data or to at least a part of the foreground data of the omnidirectional video. The second mapping surface is advantageously different from the first mapping surface, for example the first and second mapping surfaces have different dimensions and/or are centred at different origins.

According to an optional variant, data representative of additional second mapping surfaces may be obtained/decoded from additional second layers of the bitstream, each additional second layer referring to a video track comprising data of a video corresponding to at least a part of the foreground of the omnidirectional video.

**Figure 29** illustrates a method for encoding data representative of an omnidirectional video implemented for example in a device 190 (described with regard to figure 19), according to a non-restrictive embodiment of a second aspect of the present principles.

In a step 291, the different parameters of the device 190 are updated. In particular, the data associated with the first and second videos are initialised in any way.

In a step 292, data representative of a first mapping surface is encoded into a first layer of a bitstream. The first layer is associated with and refers to a first video track that comprises data of a first video that corresponds to the background data of the omnidirectional video.

In a step 293, data representative of a second mapping surface is encoded into a second layer of the bitstream. The second layer is associated with and refers to a second video track that comprises data of a second video that corresponds to the foreground data or to at least a part of the foreground data of the omnidirectional video. The second mapping surface is advantageously different from the first mapping surface, for example the first and second mapping surfaces have different dimensions and/or are centred at different origins.

In a step 294, transparency information associated with the second video is encoded into the bitstream. The transparency information is for example encoded into the second layer or into a third layer different from the second layer. The transparency information may correspond to a pointer to a third video track that comprises data of a third video representative of transparency, such as in an alpha channel. According to a variant, the transparency information corresponds to a color value of a background pixel of the second video or to the coordinates of a pixel of the background of the second video. According to another variant, the transparency information corresponds to a chroma-key shader intended to be executed by a renderer rendering the omnidirectional video.

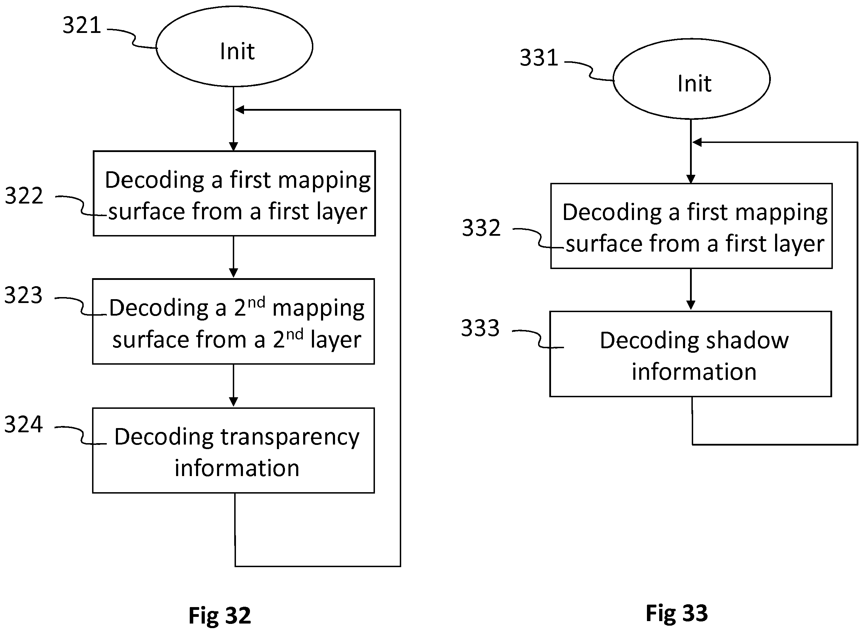

**Figure 32** illustrates a method for decoding data representative of an omnidirectional video implemented for example in a device 190 (described with regard to figure 19), according to a non-restrictive embodiment of a second aspect of the present principles.

In a step 321, the different parameters of the device 190 are updated. In particular, the data associated with the omnidirectional video is initialised in any way.

In a step 322, data representative of a first mapping surface is decoded from a first layer of a bitstream. The first layer is associated with and refers to a first video track that comprises data of a first video that corresponds to the background data of the omnidirectional video.

In a step 323, data representative of a second mapping surface is decoded from a second layer of the bitstream. The second layer is associated with and refers to a second video track that comprises data of a second video that corresponds to the foreground data or to at least a part of the foreground data of the omnidirectional video. The second mapping surface is advantageously different from the first mapping surface, for example the first and second mapping surfaces have different dimensions and/or are centred at different origins.

In a step 324, transparency information associated with the second video is decoded from the bitstream. The transparency information is for example decoded from the second layer or from a third layer different from the second layer. The transparency information may correspond to a pointer to a third video track that comprises data of a third video representative of transparency, such as in an alpha channel. According to a variant, the transparency information corresponds to a color value of a background pixel of the second video or to the coordinates of a pixel of the background of the second video. According to another variant, the transparency information corresponds to a chroma-key shader intended to be executed by a renderer rendering the omnidirectional video.

**Figure 30** illustrates a method for encoding data representative of an omnidirectional video implemented for example in a device 190 (described with regard to figure 19), according to a non-restrictive embodiment of a third aspect of the present principles.

In a step 301, the different parameters of the device 190 are updated. In particular, the data associated with the first and second videos are initialised in any way.

In a step 302, data representative of a first mapping surface is encoded into a first layer of a bitstream. The first layer is associated with and refers to a first video track that comprises data of a first video that corresponds to the background data of the omnidirectional video.

In a step 303, shadow information associated with at least a part of the first mapping surface is encoded into the bitstream. The part of the first mapping surface with which the shadow information is associated is deformed to correspond to the topology of the part(s) of a scene represented in the first video, which comprise shadow(s). The shadow information is encoded into a second layer of the bitstream or into the first layer and advantageously points to a second video track that comprises data of a second video representative of shadow (either as a grayscale or as a video representative of shadow with an alpha key, i.e. with data representative of transparency). According to a variant, is associated with a deformed first mapping surface of the same type than the deformed first mapping surface associated with the first video but with smaller dimension.

**Figure 33** illustrates a method for decoding data representative of an omnidirectional video implemented for example in a device 190 (described with regard to figure 19), according to a non-restrictive embodiment of a third aspect of the present principles.

In a step 331, the different parameters of the device 190 are updated. In particular, the data associated with the omnidirectional video is initialised in any way.

In a step 332, data representative of a first mapping surface is decoded into a first layer of a bitstream. The first layer is associated with and refers to a first video track that comprises data of a first video that corresponds to the background data of the omnidirectional video.

In a step 333, shadow information associated with at least a part of the first mapping surface is decoded from the bitstream. The part of the first mapping surface with which the shadow information is associated is deformed to correspond to the topology of the part(s) of a scene represented in the first video, which comprise shadow(s). The shadow information is decoded from a second layer of the bitstream or from the first layer and advantageously points to a second video track that comprises data of a second video representative of shadow (either as a grayscale or as a video representative of shadow with an alpha key, i.e. with data representative of transparency). According to a variant, is associated with a deformed first mapping surface of the same type than the deformed first mapping surface associated with the first video but with smaller dimension.

Naturally, the present disclosure is not limited to the embodiments previously described.

In particular, the present disclosure is not limited to a method and device for generating a stream but also extends to a method for encoding/decoding a packet comprising data representative of an object of a scene and to any device implementing this method and notably any devices comprising at least one CPU and/or at least one GPU.

The present disclosure also relates to a method (and a device configured) for displaying images rendered from the data stream comprising the information representative of the object of the scene and to a method (and a device configured) for rendering and displaying the object with a flat video.

The present disclosure also relates to a method (and a device configured) for transmitting and/or receiving the stream.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of encoding data representative of an omnidirectional video into a bitstream, the method comprising:
- encoding data representative of a first mapping surface into a first layer of said bitstream, said first layer referring to a first video track, data comprised in said first video track corresponding to background data of said omnidirectional video;
- encoding shadow information associated with at least a part of said first mapping surface into said bitstream, said at least a part being deformed to correspond to the topology of at least a part of a scene represented in said first video and comprising shadow.

2. A device configured to encode data representative of an omnidirectional video into a bitstream, the device comprising a memory associated with at least one processor configured to:
- encode data representative of a first mapping surface into a first layer of said bitstream, said first layer referring to a first video track, data comprised in said first video track corresponding to background data of said omnidirectional video;
- encode shadow information associated with at least a part of said first mapping surface into said bitstream, said at least a part being deformed to correspond to the topology of at least a part of a scene represented in said first video and comprising shadow.

3. The method according to claim 1 or the device according to claim 2, wherein said shadow information is encoded into a second layer of said bitstream with data representative of said first mapping surface, said second layer referring to a second video track.

4. The method according to claim 1 or the device according to claim 2, wherein said shadow information is encoded into said first layer, said shadow information comprising a pointer to a second video track.

5. The method or the device according to claim 3 or 4, wherein said second video track comprises data representative of transparency to apply to said first video.

6. The method or the device according to claim 3 or 4, wherein said second video track comprises data representative of shadow associated with data representative of background obtained from said first video and data representative of transparency.

7. A method of decoding data representative of an omnidirectional video from a bitstream, the method comprising:
- decoding data representative of a first mapping surface from a first layer of said bitstream, said first layer referring to a first video track, data comprised in said first video track corresponding to background data of said omnidirectional video;
- decoding shadow information associated with at least a part of said first mapping surface from said bitstream, said at least a part being deformed to correspond to the topology of at least a part of a scene represented in said first video and comprising shadow.

8. A device configured to decode data representative of an omnidirectional video from a bitstream, the device comprising a memory associated with at least one processor configured to:
- decode data representative of a first mapping surface from a first layer of said bitstream, said first layer referring to a first video track, data comprised in said first video track corresponding to background data of said omnidirectional video;
- decode shadow information associated with at least a part of said first mapping surface from said bitstream, said at least a part being deformed to correspond to the topology of at least a part of a scene represented in said first video and comprising shadow.

9. The method according to claim 7 or the device according to claim 8, wherein said shadow information is decoded from a second layer of said bitstream with data representative of said first mapping surface, said second layer referring to a second video track.

10. The method according to claim 7 or the device according to claim 8, wherein said shadow information is encoded into said first layer, said shadow information comprising a pointer to a second video track.

11. The method or the device according to claim 9 or 10, wherein said second video track comprises data representative of transparency to apply to said first video.

12. The method or the device according to claim 9 or 10, wherein said second video track comprises data representative of shadow and data representative of transparency.

13. A bitstream carrying data representative of a first mapping surface in a first layer, said first layer referring to a first video track comprising background data of an omnidirectional video and shadow information associated with at least a part of said first mapping surface, said at least a part being deformed to correspond to the topology of at least a part of a scene represented in said first video and comprising shadow.
